# EUROPEAN PATENT APPLICATION

(11) **EP 1 947 670 A2**
(43) Date of publication of application: **23.07.2008**
(21) Application number: 08100025.9
(22) Date of filing: 02.01.2008
(51) Int. Cl.: H01J 9/00

(54) **Wavelength converting structure and manufactur and use of the same**

(30) Priority: 19.01.2007 TW 96102110; 25.07.2007 TW 96127149
(71) Applicant: Kismart Corporation, Taipei, Taiwan (CN)
(72) Inventor: CHANG, Wen-Chi, Hsinchu City Taiwan (TW); LIN, Yu-Ping, Taoyuan City Taiwan (TW); WANG, Fu-Tien, Tong Village, Fusing Township Changhua County Taiwan (TW); CHEN, Chih-Yuan, South District Tainan City Taiwan (TW); CHEN, Ding-He, Chupei City Taiwan (TW)
(74) Representative: Viering, Jentschura & Partner

(57) **Abstract**

A wavelength converting structure is provided. The wavelength converting structure comprises the following:
a substrate, and
a wavelength converting coating which is deposited on the substrate and comprises:
(a) a phosphor powder which can be excited by UV_{c}; and
(b) an anti-UV_{C} adhesive,

wherein the thickness of the wavelength converting coating is 2 to 10 times the average particle size of the phosphor powder and the amount of the phosphor powder in the wavelength converting coating conforms to at least one of the following requirements:
(i) the phosphor powder should be about 30 % to 85% by volume of the wavelength converting coating based on the total volume of the phosphor powder and the adhesive; and
(ii) the weight ratio of the phosphor powder to the adhesive should range from 1:1 to 20:1.

The wavelength converting coating can effectively convert UV_{C} to visible light to provide a visible light source with a high surface area.

## Description

This application claims priorities to Taiwan Patent Application No. 096102110 filed on January 19, 2007 and Taiwan Patent Application No. 096127149 filed on July 25, 2007.

### CROSS-REFERENCES TO RELATED APPLICATIONS

Not applicable.

### BACKGROUND OF THE INVENTION

### Field of the Invention

The subject invention relates to a wavelength converting structure. More particularly, the invention relates to a structure comprising a wavelength converting coating that can convert ultraviolet rays with a wavelength of no more than 280 nm (i.e. UV_{C}) into a visible light. The coating may be used in conjunction with a UV_{C} light source to convert a UV_{C} wavelength into a visible light wavelength in the presence of air. The steps for manufacturing the wavelength converting structure are simple. Likewise, a flat light source with a large emitting area can be made in simply as well. Additionally, the subject invention further relates to the application of the wavelength converting structure in a light emitting module and a backlight module.

### Descriptions of the Related Art

The trend for light sources used in displays has become increasingly flat with large emitting areas. The flat light sources with large emitting areas are very important for backlight modules in large-sized flat panel liquid crystal displays. For various conventional light sources, the means currently used to provide visible light through energy/wavelength conversion includes cold cathode fluorescent lamps (CCFL), external electrode fluorescent lamps (EEFL), light emitting diodes (LED), carbon nanotubes (CNT), flat fluorescent lamps (FFL), and organic light emitting displays (OLED).

Among the approaches described above, the CCFL technique involves a phosphor layer coating on the interior wall of the glass tube. A small amount of inert gas and Hg vapor is also encapsulated into the fluorescent tube. Then, during the electrode discharge process, the Hg vapor emits ultraviolet rays due to the electron impact. The ultraviolet rays are then converted by the phosphor layer on the tube wall into visible light, thus providing a visible light wavelength. The CCFL technique offers many advantages, such as improved production technology, relatively lower costs, etc. However, the phosphor coating and the light emitting source have to be disposed in the same vacuum lamp tube, and thus, it is difficult to produce large-sized lamps and allow for wavelength conversions in large areas. Moreover, if a larger light emitting area is obtained by lengthening the lamp tube, there are some disadvantages such as low production yields and a substantial increase in costs.

The EEFL differs from the CCFL mainly in that the electrodes are disposed outside the lamp tube, so that multiple fluorescent lamp tubes may be driven by the same converter, resulting in decreased costs and a higher power efficiency. However, the limitations in application still exist with the EEFLs. For example, if the EEFL lamp gives out inadequate brightness and the current is increased under an increased lamp tube voltage to improve the output brightness, the size of the converter will be increased dramatically. As a result, there will be poor heat dissipation. Moreover, just like the CCFL, the EEFL also cannot provide a larger light emitting area.

The LED is a light emitting device made of a semiconductor material. Th e III-V group compound (e.g. GaP, GaAs and etc.) is used as the material. Through the application of a current into the semiconductor compound, the LED may emit light as a result of the combination of electrons and holes. The LED features a small volume, a prolonged service life, a low driving voltage, and a fast response speed. Unfortunately, the LED still has some shortcomings, such as color mixing inaccuracies, high manufacturing costs, inferior uniformity, poor heat dissipation, and low power efficiency.

In the CNT, the electrons are released from the tip using an intense electric field, and accelerated with a high voltage to impact a fluorescent plate, thus, generating a light wavelength energy. Although the CNT has advantages, such as low power consumption, low temperature operation, and lack of Hg, the CNT still presents some problems due to its complicated manufacturing process, high cost, poor brightness stability, and inferior uniformity. Furthermore, the manufacturing technology for the large-sized CNT is still under development.

The FFL uses the ultraviolet rays generated from the discharge of an inert gas to excite colored phosphor powders, and then a light wavelength visible to human eyes is generated. Similarly, although the FFL has advantages, such as a lack of Hg, prolonged service life and simplified optical design, the FFL still presents some problems due to their complicated manufacturing process, high manufacturing costs, low efficiency, and poor heat dissipation.

In the OLED, a biasing voltage is applied externally to drive the injection of the electrons/holes from the positive/negative electrodes, respectively, so that under the presence of an electric field, the holes and electrons will move towards each other for recombination. As a result, the energy of the light wavelength will be released. Although the OLED features a thinner structure, greater brightness, wider operational temperature range, lower power consumption and lower driving voltage, the OLED currently available still has problems due to difficulties with the production of large-sized models, high manufacturing costs, low efficiency and a short service life.

It can be seen from the above description that the existing sources of visible light either lack the maturity in terms of their production technology (e.g., LED, CNT, OLED and FFL), or are prevented from being produced at large-sizes due to their innate limitations in production, both failing to convert light in a large area using simple and inexpensive means.

In view of the above, the subject invention provides a method for wavelength conversion in a large area using a simple process in combination with the existing technology.

### SUMMARY OF THE INVENTION

In this disclosure, the term "UV_{C}" refers to the ultraviolet rays with a wavelength of no more than 280 nm. It is preferred for the wavelength to fall between 200 nm to 280 nm, and particularly from 250 nm to 260 nm. It is best to have a wavelength of 253.7 nm. The term "UV_{B}" refers to the light rays with a wavelength ranging from 280 nm to 320 nm, while the term "UV_{A}" refers to the light rays with a wavelength ranging from 320 nm to 400 nm. The phrase "macromolecular adhesive" refers to the molecule with a molecular weight greater than 1,000, including an oligomer and polymer. The phrase "phosphor that can be excited by ultraviolet ray (or by UV_{C}, UV_{A} or UV_{B})" refers to a material that can absorb ultraviolet rays (or UV_{C}, UV_{A} or UV_{B}) and emit visible light when irradiated by ultraviolet rays (or by UV_{C}, UV_{A} or UV_{B}).

One objective of the subject invention is to provide a wavelength converting structure, comprising:
a substrate; and
a wavelength converting coating which is disposed on the substrate and comprises:
   (a) a phosphor powder which can be excited by UV_{C}; and
   (b) an anti-UV_{C} adhesive,
   wherein the thickness of the wavelength converting coating is about 2 to about 10 times the average particle size of the phosphor powder, and the amount of the phosphor powder in the wavelength converting coating conforms to at least one of the following requirements:
   (i) the phosphor powder is about 30% to about 85% by volume of the wavelength converting coating based on the total volume of the phosphor powder and the adhesive; and
   (ii) the weight ratio of the phosphor powder to the adhesive ranges from about 1:1 to about 20:1.

In combination with a UV_{C} light source, the wavelength converting structure of the subject invention can provide a flat source of visible light with a large area. The visible light source can further be used in a backlight module to provide a display panel with a large area by simple means.

Another objective of the subject invention is to provide a method for producing a wavelength converting structure, comprising the following steps:
providing a substrate;
coating a slurry on a surface of the substrate, wherein said slurry is placed in a storage vessel and comprises:
   (a) a phosphor powder which can be excited by UV_{C};
   (b) an anti-UV_{C} adhesive; and
   (c) an organic solvent,
wherein the weight ratio of the phosphor powder to the adhesive ranges from about 1:1 to about 20:1, and
drying the coated substrate.

After reviewing the embodiments described below, persons having ordinary skill in the art can easily appreciate the basic spirit and other inventive objective of the subject invention and the technical means and preferred embodiments implemented for the subject invention.

### BRIEF DESCRIPTION OF THE DRAWINGS

**FIG. 1A** depicts an illustrative view of an embodiment of a wavelength converting structure in accordance with the subject invention.
**FIG. 1B** depicts an illustrative view of another embodiment of the wavelength converting structure in accordance with the subject invention, wherein a substrate contained therein is a composite layer.
**FIG. 1C** depicts an illustrative view of yet another embodiment of the wavelength converting structure in accordance with the subject invention, wherein a substrate contained therein is an optical enhancement layer.
**FIG. 2A** depicts a light-emitting module utilizing a wavelength converting structure.
**FIG. 2B** depicts an illustrative view of a light source holder that may be used in the frame body of the light-emitting module disclosed herein.
**FIGS. 3A** and **3B** depict the light-mixing embodiment of the light-emitting module using the subject disclosure.
**FIGS. 4A** to **4C** depict an embodiment of a light-emitting module comprising a UV-blocking coating.
**FIG 5** depicts an illustrative view of a protection layer disposed on the interior wall of the frame body of the light-emitting module.
**FIG. 6** depicts an illustrative view of an embodiment of a side type backlight module using a wavelength converting structure.
**FIG. 7** depicts an illustrative view of an embodiment of a direct type backlight module using a wavelength converting structure.
**FIG. 8** depicts an illustrative view of a conventional direct type backlight module.
**FIGS. 9A** to **12C** depict illustrative views of an embodiment of a backlight module comprising various fixing devices.
**FIG. 13A** depicts an original light spectrum of a UV_{C} module in Example 1.
**FIG. 13B** depicts a light spectrum of the UV_{C} module depicted in FIG. 13A emitted through the wavelength converting structure of the subject invention.
**FIG. 14** depicts the variation of the color coordinates and the brightness measured on the sample obtained from Example 2, which has been illuminated by UV_{C} for 3400 hours.
**FIG. 15A** depicts the light spectrum of an embodiment without a UV-blocking coating obtained from Example 6.
**FIG. 15B** depicts the light spectrum of an embodiment with a UV-blocking coating obtained from Example 6.
**FIG. 16A** depicts the light spectrum of an embodiment without a UV-blocking coating obtained from Example 7.
**FIG. 16B** depicts the light spectrum of an embodiment with a UV-blocking coating obtained from Example 7.

### DESCRIPTION OF THE PREFERRED EMBODIMENT

To provide a flat light source with a large area, phosphor is used to convert the ultraviolet rays into a visible light. Particularly, a slurry containing phosphor powder is applied directly over a flat substrate to form the wavelength structure. As a result, the ultraviolet rays, particularly those with the UV_{C} spectrum band, are converted into a visible light through the wavelength converting structure. That is, the phosphor powder is excited by the ultraviolet rays to generate visible light. Such a wavelength converting structure can enhance the uniformity of the light emission and optionally provide the desired light emitting area.

As described above, although the CCFL has advantages such as improved production technology and lower costs, it is difficult to produce a large-sized lamp tube and achieve the wavelength conversion in a large area since the phosphor coating and the light emitting source have to be disposed in the same vacuum lamp tube. In more detail, in the CCFL, a phosphor slurry solution (a composition composed of a phosphor powder, an organic component, an inorganic component, and a solvent) is coated on the interior wall of a glass tube, after which the organic component contained in the composition is removed by sintering to form a phosphor layer on the interior wall of the glass tube. Subsequently, the Hg vapor is injected into the glass tube and encapsulated therein. The Hg vapor is excited using electrodes to emit an UV_{c} light, and then, the UV_{c} is converted into a visible light through the phosphor layer on the glass tube.

In the above conventional CCFL manufacturing process, the coating of the phosphor layer is carried out vertically. For example, the phosphor slurry is first siphoned to the top of the standing lamp tube, and then is allowed to coat the interior wall thereof from the top to the bottom by gravity. Subsequently, the organic component in the coating is removed by sintering to eventually form the desired phosphor layer. However, such a coating approach will result in a non-uniform thickness between the top and the bottom, which is especially the case when the lamp tube has a large size requirement (i.e., a long lamp tube is required).

Furthermore, in the current CCFL structure, the phosphor layer is sintered onto the interior wall of the glass tube. It is also difficult to prevent the leakage of the ultraviolet rays through the interstice of the phosphor layer. For example, in current LCD technology, the leakage of ultraviolet rays may detrimentally affect the properties of the optical materials such as the diffusion plate and brightness enhancement film, causing the degradation of such optical materials. For this reason, most of the materials need to be treated with an anti-ultraviolet coating to prolong its service life.

In view of the above, the inventors have attempted to separate the lamp tube from the phosphor layer by coating the phosphor slurry directly onto the individual substrates rather than the interior wall of the glass tube. As a result, the non-uniformity of the CCFL phosphor layer will be eliminated, enhancing the light emission uniformity, and also providing a large light emitting area as desired. It has been found through research that, by use of a specific solvent and a specific adhesive and by controlling the amounts of the adhesive and the phosphor powder, the resulting slurry composition may form a wavelength converting coating on the substrate; said coating can effectively convert the ultraviolet rays into visible light, without using a sintering process. The slurry can be coated on the substrates in a relatively simple coating approach (e.g., a roll-to-roll coating approach) such that mass productivity would not be a problem. Alternatively, other coating approaches may be employed, for example (but not limited to) dip coating, comma coating, spraying coating, spin coating, slot coating, curtain coating, gravure coating, or meyer rod coating. The coating can be optionally dried in any appropriate manner, for example (but not limited to), through natural volatilization, or through forced volatilization such as under ventilation and/or heating (for example, through the injection of hot air). The processed coating in combination with the substrate can become a simple wavelength converting coating structure, which may be used in combination with existing backlight sources, lamps, or solid state lighting (e.g., LED and OLED) without modifying the preexisting structure design. As a result, the coating is highly applicable.

Additionally, the wavelength converting coating structure can effectively prevent the degradation of the phosphor powder as was present in the conventional CCFL. For the conventional CCFL, light with a wavelength of 185 nm generated during the discharge will cause the phosphor powder to generate a color center, resulting in a new absorptive spectrum band and degrading the brightness of the phosphor powder (see the description in U.S. Patent No. 6402987, the disclosure of which is incorporated herein by reference). Secondly, the recombination of the Hg⁺ ions and the electrons at the tube wall will release an energy of 10.42 eV, which may disrupt the lattice structure of the phosphor powder, leading to a further degradation of the brightness. Moreover, Na⁺ ions normally exist normally inside the CCFL tube and tend to recombine with electrons generated during the discharge process to form Na atoms. These Na atoms may diffuse into the crystal grains of the phosphor powder to cause the performance degradation of the phosphor powder. Therefore, since the wavelength converting coating is separate from the UV_{C} light source (i.e., the phosphor powder is separate from the UV_{c} light source) in the wavelength converting structure of the subject invention, the above problems due to the collocation of the phosphor power and the UV_{c} light source in the same lamp tube of the conventional CCFL can be effectively eliminated when the wavelength converting structure is applied in a backlight module,.

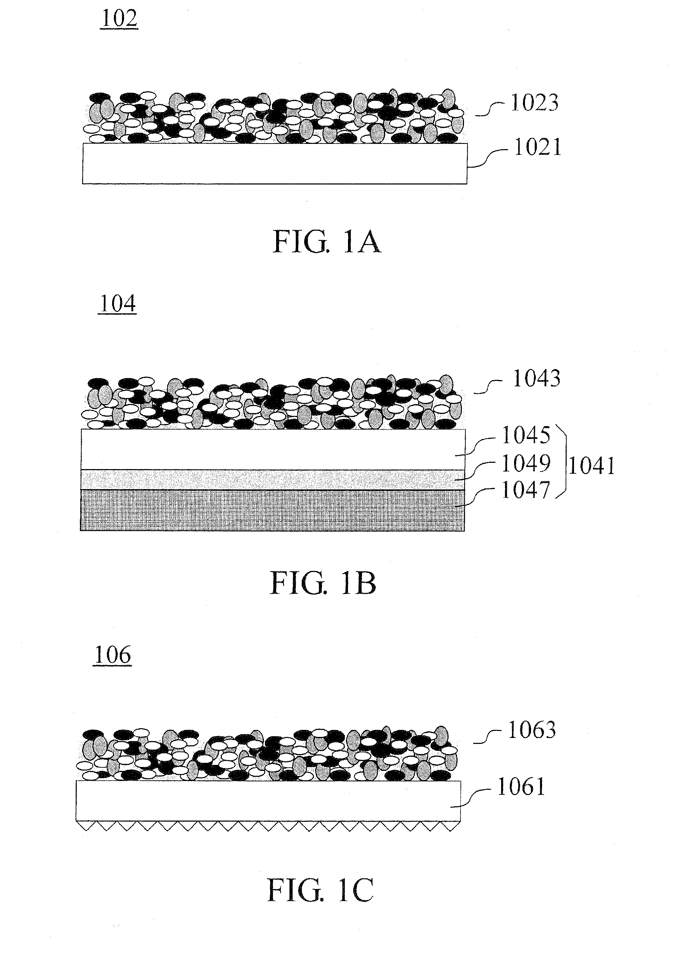

Specifically, the subject invention provides a wavelength converting structure, an embodiment of which is illustrated in FIG. 1A, where ○, • and 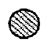 respectivel y denote the phosphor powders of different colors. The wavelength converting structure 102 comprises a substrate 1021 and a wavelength converting coating 1023. The coating 1023 is disposed on the substrate 1021, and comprises a phosphor powder excitable by UV_{C} and an anti-UV_{C} adhesive. The thickness of the wavelength converting coating 1023 is 2 to 10 times the average particle size of the phosphor powder, and the amount of the phosphor powder in the wavelength converting coating 1023 conforms to at least one of the following requirements:
(i) the phosphor powder is 30 % to 85% by volume of the wavelength converting coating based on the total volume of the phosphor powder and the adhesive; and
(ii) the weight ratio of the phosphor powder to the adhesive ranges from 1:1 to 20:1.

Any appropriate phosphor powder excitable by UV_{C} may be adopted in the wavelength converting coating. For example (but not limited thereto), the phosphor powder may be selected from a group consisting of europium doped yttrium oxide, terbium doped cerium lanthanum phosphate, europium doped barium magnesium aluminum oxide, and combinations thereof. Appropriate products available directly in the market can also be used as the phosphor powder of the wavelength converting coating.

In the wavelength converting coating, the adhesive used can bond the phosphor powder to form a wavelength converting layer, and is usually selected from macromolecular adhesives. However, when used in combination with UV_{C}, anti-UV_{C} adhesives are preferred in the wavelength converting coating to prevent the degradation of the adhesive itself caused by the exciting process.

A detailed description is provided using a 253.7 nm UV_{C} as an example. Because the light energy of such UV_{C} is about 113 kcal/mol, it is believed without the limitation by theory that a macromolecular adhesive with at least one chemical bond with a molecular bond energy of higher than 113 kcal/mol will be sufficient to resist the energy of the UV_{C} spectrum band. As a result, the degradation of the adhesive itself is prevented due to the excitation. Since the carbon-fluorine bond has a molecular bond energy of 132 kcal/mol, if a 253.7 nm UV_{C} is used, the following fluorine-containing polymeric adhesive will be appropriate: polytetrafluoroethylene (PTFE), poly(vinylidene fluoride) (PVDF), poly(vinylidene fluoride-hexafluoropropylene) (PVDF-HFP), ethylene-tetralluoroethylene copolymer (ETFE), fluorinated ethylene propylene copolymer (FEP), perfluoroalkoxy (PFA), fluoro-rubber, fluoro-elastomer, amorphous fluoropolymers, and combinations thereof. Alternatively, the following silicon-containing polymers may also be employed: silicon rubber, polysiloxane, and combinations thereof. Also, other high-efficiency polymers such as polyimide (PI) and polyethersulfone (PES) may be employed as an adhesive in the wavelength converting coating when the ultraviolet rays of 253.7 nm UV_{C} is used. Preferably, the macromolecules containing a carbon-fluorine bond are employed as the adhesive. Alternatively, other inorganic or organic-inorganic compounds that have a bonding capability or can serve as a phosphor matrix, e.g., inorganic materials such as silicon dioxide, titanium dioxide and zirconium dioxide or sol-gel materials, can be used in the wavelength converting coating in combination with the 253.7 nm UV_{c} wavelength.

As described above, the amount of the phosphor powder in the wavelength converting coating shall conform to the following requirements: (1) the phosphor powder should be about 30% to about 85% by volume based on the total volume of the phosphor powder and the adhesive; and/or (2) the weight ratio of the phosphor powder to the adhesive ranges from about 1:1 to about 20:1. Obviously, the lower the amount of the adhesive, the weaker the adhesion between the individual phosphors in the resulting phosphor layer and also between the phosphors and the substrate will be. Conversely, the higher the amount of the adhesive, the better the adhesion effect will be. However, the chance for the adhesive to be exposed to the UV_{C} is enhanced, which will not only cause performance degradation of the adhesive, but also reduce the light emitting efficiency of the resulting wavelength converting structure over a long period of time. Therefore, to obtain an appropriate wavelength converting coating, it is preferred for the wavelength converting coating to contain an amount of the phosphor powder conforming to the following requirements to form a sachima-like structure (i.e., the adhesive in the coating is coated in a film form on the phosphor powder rather than in a continuous phase): (1) the phosphor powder should be about 50% to about 70% by volume; and/or (2) the weight ratio of the phosphor powder to the adhesive ranges from about 2.5:1 to about 10:1. More preferably, the weight ratio of the phosphor powder to the adhesive ranges from about 3 ;1 1 to about 6:1.

In consideration of the light emitting efficiency, the particle size distribution of the phosphor powder preferably ranges from 1µm to 30 µm, and more preferably from 1 µm to 10 µm. Alternatively, two or more particle size distributions may be used in combination to improve the stacking efficiency and enhance the ultraviolet absorption efficiency and visible light emitting efficiency of the resulting wavelength converting coating. In this case, there may be only one of them falling within the aforesaid range. For example, the first particle size distribution may range from 1 µm to 10 µm, while the second particle size distribution may range from 1 nm to 1000 nm.

In the wavelength converting structure, if the converting coating is excessively thick, the converted visible light may be blocked thereby. If the converting coating is excessively thin, UV_{c} leakage may occur due to insufficient UV_{C} absorption, resulting in the yellowing of the substrate of the wavelength converting structure or the polymeric materials such as the adhesive. Hence, to provide an adequate UV_{C} converting efficiency and avoid yellowing, it is desirable to control the thickness of the wavelength converting coating. It has been found that, if the thickness of the converting coating is about 2 to about 10 times the average particle size of the phosphor powder, the coating can consist of a stack of multiple phosphor powder layers, so that multiple times of UV_{C} reflection and/or refraction may occur in the coating to improve both the light emitting efficiency and the blockage of UV_{C}. The thickness of the converting coating should be about 3 to about 5 times the average particle size of the phosphor powder. For example, if the average particle size of the phosphor powder ranges from about 3 µm to about 4 µm, the thickness of the converting coating preferably ranges from about 6 µm to about 40 µm, and more preferably from about 10 µm to about 20 µm.

The substrate of the wavelength converting structure can be a flexible film, especially a flexible film made of a polymer to facilitate the conventional roll-to-roll coating approach for mass production. The flexible film is preferably transparent, if not, highly transparent. For example (but not limited thereto), the substrate can be a film made of a material selected from a group consisting of polyethylene terephthalate (PET), triacetyl-cellulose (TAC), poly(ethylene-2,6-naphthalate) (PEN), polyether sulfone (PES), poly(vinylidene fluoride) (PVDF), poly(ethylene-co-octene) (PE-PO), poly(propylene-co-ethylene) (PP-PE), atactic polypropylene (aPP), isotactic polypropylene (iPP), functionalized polyolefin, and linear low density polyethylene-g-maleic anhydride (LLDPE-g-MA). The optical level PET and TAC are more preferred.

A transparent thin sheet may also be used as the substrate of the wavelength converting structure. For example (but not limited thereto), the substrate can be a thin sheet made of glass, quartz, poly(methyl methacrylate) (PMMA), polystyrene (PS), methyl methacrylate-co-styrene (MS), or polycarbonate (PC). Alternatively, a light transmissive fiber fabric (typically made of glass) may be used as the substrate. Still alternatively, a composite layer composed of two or more aforesaid films and/or thin sheets may be adopted as the substrate, in which case a pressure sensitive polymer adhesive may be utilized to bond the individual layers.

The wavelength converting structure may be produced by a method comprising the following steps:
providing a substrate;
coating a slurry on a surface of the substrate, wherein said slurry is placed in a storage vessel and comprises:
   (a) a phosphor powder which can be excited by UV_{C};
   (b) an anti-UV_{C} adhesive; and
   (c) an organic solvent,
wherein both the phosphor powder and the adhesive are as defined in the above description, and the weight ratio of the phosphor powder to the adhesive ranges from about 1:1 to about 20:1; and
drying the coated substrate.

Any appropriate organic solvent may be used as a carrier for the phosphor powder and the adhesive. Generally, in consideration of the simplicity of a continuous coating process, the viscosity of the slurry is typically controlled within a range from 10 cps to 10000 cps. In this case, an organic solvent with a low boiling point is preferred to prevent phosphor sedimentation and color deviation during the drying process due to the low volatility of the solvent Suitable solvents with a low boiling point include (but is not limited to) those selected from a group consisting of C₃-C₄ ketones, C₁-C₄ linear alkanes substituted with one or more halo groups, C₅-C₇ linear alkanes, C₅-C₆ cycloalkanes, C₁-C₄ linear alkanols, C₂-C₄ ethers, ethyl acetate, benzene, toluene, acetonitrile, tetrahydrofuran, petroleum ether, a fluoro-solvent, and combinations thereof. More preferably, the organic solvent is selected from a group consisting of C₃-C₄ ketones, C₁-C₄ linear alkanes substituted with one or more halo groups, C₅-C₇ linear alkanes, C₅-C₆ cycloalkanes, acetonitrile, and combinations thereof.

Specific examples of suitable organic solvents with a low boiling point include (but is not limited to): acetone, methyl ethyl ketone, 1,2-dichlorethane, dichloromethane, chloroform, pentane, n-hexane, heptane, cyclopentane, cyclohexane, methanol, ethanol, propanol, isopropanol, tertiary-butanol, ethyl ether, ethyl acetate, benzene, toluene, acetonitrile, tetrahydrofuran, petroleum ether, and combinations thereof. Preferred specific examples are toluene, methyl ethyl ketone, ethyl acetate, 1,2-dichlorethane, or combinations thereof.

The content of the organic solvent in the slurry is not critical to the subject invention, and may be adjusted depending on the desired viscosity of the slurry. Generally, the content of the organic solvent based on the total weight of the slurry ranges from about 20 wt% to about 80 wt%, and preferably ranges from about 35 wt% to about 55 wt%.

Optionally, other components can be added to the slurry to prolong the service life of the wavelength converting structure. The other component added optionally includes (but is not limited to) a stabilizer, an absorbent, a blocker, and combinations thereof. In respect of this, the metal oxides (preferably those with nanometer size) such as alumina, zinc oxide, and titanium dioxide may provide a blockage effect. Organic compounds such as benzophenone and benzotriazole are typical absorbents that can absorb the ultraviolet rays to release heat. Photo stabilizers such as a hindered amine can absorb the excited groups to prevent them from any chemical reaction. Generally, to avoid any adverse effect on the performance of the wavelength converting structure, these components are typically added in a total amount of no more than 10 wt% based on the total weight of the slurry.

In the aforesaid method, the phosphor powder and the adhesive can be blended into the solvent prior to or during the coating process to form a desired slurry, which is then coated onto the surface of the substrate. Subsequently, the solvent is removed through a drying process to eventually form the desired wavelength converting coating. The slurry in the storage vessel should be properly stirred during the coating process to avoid solid sedimentation and phase separation due to the density difference therebetween. The stirring may be achieved via various suitable means. For example (but not limited thereto), the stirring action can be achieved by mechanically stirring, homomixing, blending, ultrasonic-mixing, three-roll-mills, ball-mills, planet mixing, or pulse pressurizing the slurry to form a turbulence in the vessel.

The coating process may be accomplished in any appropriate approach, for example (but not limited to), dip coating, comma coating, spraying coating, spin coating, slot coating, curtain coating, gravure coating, or roll-to-roll coating. Optionally, the coating may be applied to achieve a desired thickness through one or more coating operations. Additionally, the coating may be dried in any appropriate manner, for example (but not limited to), through natural volatilization, or through forced volatilization under such as ventilation and/or heating (for example, through the injection of hot air).

The wavelength converting structure may be applied in a light-emitting module. In this case, an optical enhancement structure such as a prismatic or a particulate structure can be formed on one side of the substrate opposite to the wavelength converting layer to further enhance the optical effect. Optionally, to enhance the brightness or the polarizing effect, the wavelength converting structure may further comprise any appropriate optical elements, for example, an optical film or sheet such as a diffusion plate, a diffusion film, a brightness enhancement film (BEF), a dual brightness enhancement film (DBEF), a prism plate, a lenticular film, a polarizer, and combinations thereof. Another embodiment of the wavelength converting structure is illustrated in FIG. 1B and 1C, where ○, • and 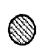 respectively denote the phosphor powders of different colors. In FIG. 1B, the wavelength converting structure 104 comprises a substrate 1041 and a wavelength converting coating 1043 on the substrate 1041. The substrate 1041 is a composite layer, which is composed of a transparent film 1045 (e.g., a PET film) adhered to a transparent sheet 1047 (e.g., a PMMA, MS or PC sheet) via a pressure sensitive polymer adhesive 1049. The wavelength converting structure 106 illustrated in FIG. 1C comprises a substrate 1061 and a wavelength converting coating 1063 on the substrate 1061. Here, the substrate 1061 is an optical enhancement structure with a prismatic structure or a diffusion structure disposed on one side. Optionally, a protection film such as a PET film may be disposed on the substrate for protection.

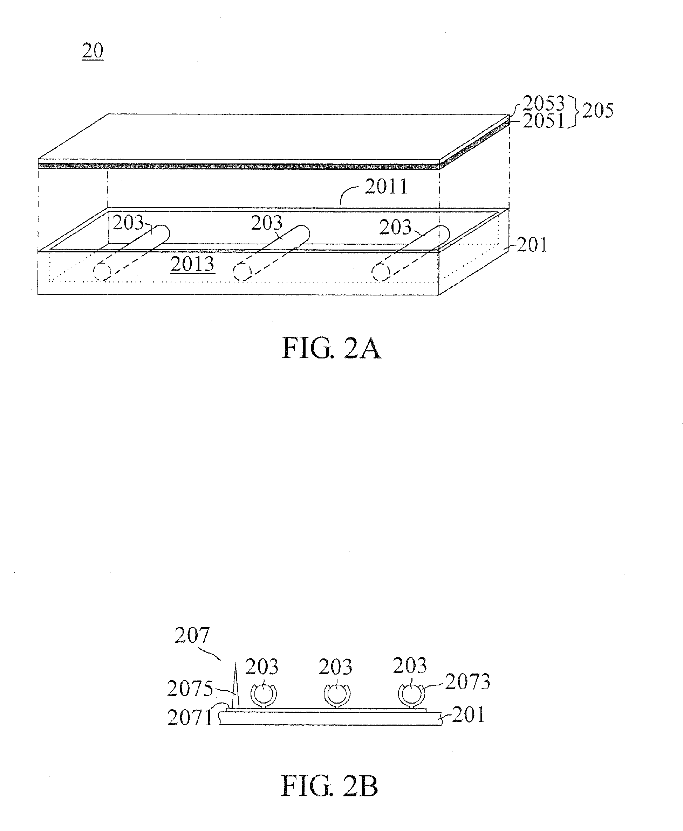

FIG. 2A depicts an exploded view of a light-emitting module using the wavelength converting structure described above. The light-emitting module 20 has a plurality of UV_{c} light sources 203 disposed inside the frame 201. The light sources 203 are typically lamps. Conventionally, to the secure the lamps against any movement, a light source holder 207 (as shown in FIG. 2B) is disposed between the individual light sources 203 and the frame 201. The light source holder 207 generally comprises a backplate 2071, a plurality of brackets 2073, and a supporting post 2075. Both the brackets 2073 and the supporting post 2075 are disposed on the backplate 2071, which is in turn fixed on the bottom of the frame 201. The brackets 2073 clamps the light source 203 to fix it at an appropriate place, and the supporting post 2075 is configured to support the optical elements (not shown) disposed above the supporting frame 201, so that the optical elements do not sag. To protect the light source holder 207 against damage by the UV_{C}, a wavelength converting coating (not shown) as described above can be optionally applied onto a surface of the light source holder 207.

The light-emitting modules (including backlight modules) to be described hereinafter can all be optionally provided with light source holders. However, for purpose of simplicity, these modules will be described in a context without such light source holders unless otherwise stated.

In reference to FIG. 2A, the frame 201 has an opening 2011, on which a wavelength converting structure 205 is disposed to form an enclosed space 2013 containing air in cooperation with the frame 201. The wavelength converting structure 205 comprises a wavelength converting coating 2051 and a substrate 2053, with the wavelength converting coating 2051 coated on one side of the substrate 2053 facing the light source 203. Once the light source 203 in the light-emitting module 20 generates UV_{C} rays to project onto the wavelength converting structure 205, the phosphor powder in the wavelength converting coating 2051 is excited by the UV_{C} rays to emit visible light.

The desired color of the visible light can be obtained by the color mixing principle. For example, a substantially white visible light is obtained by mixing red, green and blue visible light.

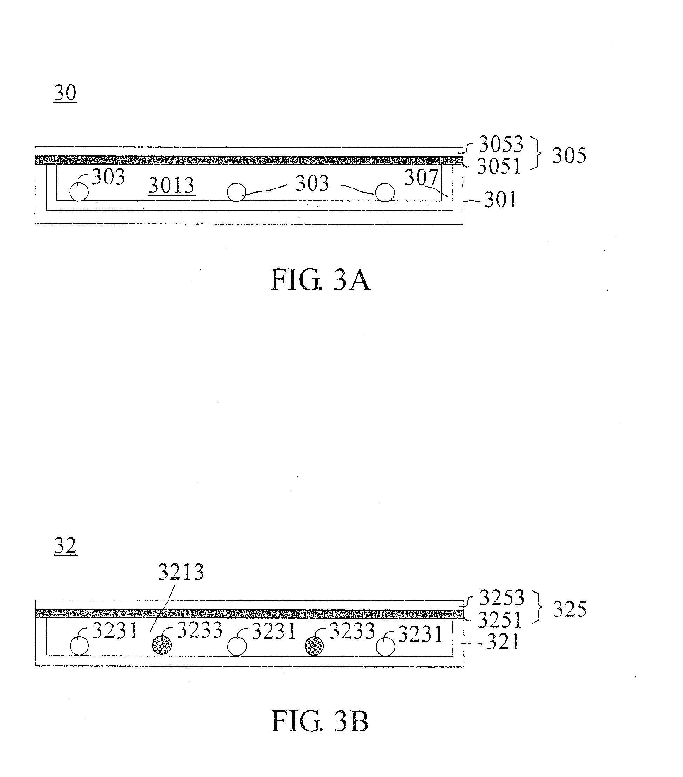

FIG. 3A depicts a cross-sectional view of a light-emitting module 30 using the wavelength converting structure 30 described above. The light-emitting module 30 comprises a frame 301, a wavelength converting structure 305, an enclosed space 3013 containing air defined by the frame 301 and the wavelength converting structure 305, and a UV_{c} light source 303 disposed inside the enclosed space 3013. The wavelength converting structure 305 comprises a first wavelength converting coating 3051 and a substrate 3053, with the first wavelength converting coating 3051 coated on one side of the substrate 3053 facing the light source 303; that is, the coating is on the light source side of the substrate 3053. The first wavelength converting coating 3051 comprises a phosphor powder that can emit the first visible light when excited by UV_{C} rays. Disposed on the interior wall of the frame 301 is a second wavelength converting coating 307, which comprises a phosphor powder that can emit a second visible light when excited by UV_{c} rays. Once the light source 303 generates UV_{C} rays to project onto the wavelength converting structure 305 and the second wavelength converting coating 307, the phosphor powder in the first wavelength converting coating 3051 of the wavelength converting structure 305 is excited by the UV_{C} rays to emit the first visible light, while the phosphor powder in the second wavelength converting coating 307 is excited by the UV_{c} rays to emit the second visible light. After transmitting through the wavelength converting structure 305, the second visible light is mixed with the first visible light emitted from the structure 305 to yield a third visible light.

In the light-emitting module 30 of FIG. 3A, if the first visible light and the second visible light have the same color, the third visible light will also have the same color, but with a higher brightness. Otherwise, if the first visible light has a different color from the second visible light, a color mixing effect is achieved, making the color of the third visible light different from that of the first and the second visible light. For instance, if the first visible light comprises red and green visible light and the second visible light is blue, a white visible light results from the color mixing effect described above.

In addition to direct coating on the interior wall of the frame 301 (as shown in FIG. 3A), the second wavelength converting coating 307 can also be disposed using the following approach: the second wavelength converting coating 307 is first applied to an appropriate flexible substrate (not shown) to form a second wavelength converting structure (not shown), which is then disposed on the interior wall of the frame 301, thereby obtaining the desired color mixing effect.

FIG. 3B depicts a cross-sectional view of another light-emitting module 32 using the wavelength converting structure described above. The light-emitting module 32 comprises a frame 321, a wavelength converting structure 325, and an enclosed space 3213 containing air defined by the frame 321 and the wavelength converting structure 325. Disposed inside the enclosed space 3213 is a plurality of light sources, including light sources 3231 that generate UV_{C} rays and light sources 3233 that generate visible light (e.g., a blue visible light). The wavelength converting structure 325 comprises a wavelength converting coating 3251 and a substrate 3253, with the wavelength converting coating 3251 coated on one side of the substrate 3253 facing the light source. The wavelength converting coating 3251 comprises a phosphor powder that emits a visible light when excited by UV_{c} rays. Similar to the light-emitting module 30 described with reference to FIG. 3A, once the light sources 3231 in the light-emitting module 32 generate UV_{c} rays to project onto the wavelength converting structure 325, the phosphor powder in the wavelength converting coating 3251 is excited by the UV_{c} rays to emit the first visible light. The first visible light is then mixed with a second visible light emitted from the light sources 3233 to yield a third visible light. The color of the third visible light can either be the same as that of the first and the second visible light if the first visible light has the same color as the second visible light, or have a mixed color if the first and the second visible light have different colors.

As is well known, in addition to ultraviolet rays of the UV_{C} spectrum band, light emitted from a typical UV_{C} light source also comprises a small amount of light in the UV_{A} spectrum band and/or the UV_{B} spectrum band. To effectively utilize the UV_{C} light, a UV_{C} light absorptive phosphor powder, or a combination of phosphor powders absorbing other ultraviolet wavelengths can be selected for use as the phosphor powder in this invention. For example, a phosphor powder that may substantially absorb 365 nm UV_{B} light or 400 nm UV_{A} light may be used so that the ultraviolet rays are converted sufficiently.

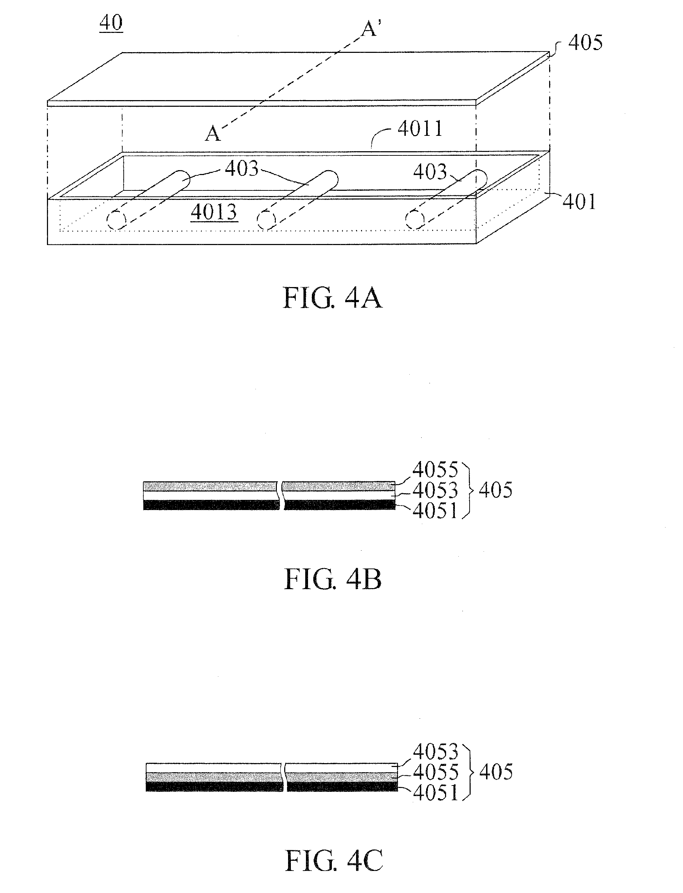

To eliminate the adverse influence of the small amount of UV_{A} light and/or UV_{B} light, a UV-blocking coating may be further included in the wavelength converting structure of the light-emitting module of the light-emitting module, in addition to the phosphor powders that can absorb UV_{C}, UV_{A} and UV_{B}, to mitigate any possible UV leakage. An illustration of the embodiment of a light-emitting module with such a UV-blocking coating is depicted in FIGS. 4A to 4C, wherein FIG. 4A is an exploded view of the light-emitting module, while FIGS. 4B and 4C are partial cross-sectional views cut along the line AA' of FIG. 4A respectively, and shows two different embodiments of the wavelength converting structure.

As shown in FIG. 4A, the light-emitting module 40 comprises a frame 401 in which a plurality of UV_{C} light sources 403 are disposed. The frame 4011 has an opening 4011 onto which a wavelength converting structure 405 is disposed. The wavelength converting structure 405 cooperates with the frame 401 to form an enclosed space 4013 containing air. FIG. 4B depicts one embodiment of the wavelength converting structure 405, which comprises from bottom to top a wavelength converting coating 4051, a substrate 4053 and a UV-blocking coating 4055. That is, the wavelength converting coating 4051 and the UV-blocking coating 4055 are respectively disposed on either side of the substrate 4053. Alternatively, the UV-blocking coating 4055 can be optionally disposed on the same side of the substrate 4053 as the wavelength converting coating 4051, as shown in FIG. 4C.

The UV-blocking coating 4055 can be made of any material that can block UV light, for example, a UV-blocking material, a UV-stabilizing material, a UV absorptive material, a UV reflective material, or combinations thereof. The common UV-blocking material comprises metal oxides, the specific examples of which are alumina, titanium dioxide, zinc oxide, and combinations thereof. Preferably, a metal oxide with a particle size substantially smaller than 1 µm is used. A suitable UV-stabilizing material is hindered amine, while suitable examples of the UV absorptive material comprise benzophenone, benzotriazole, or a combination thereof.

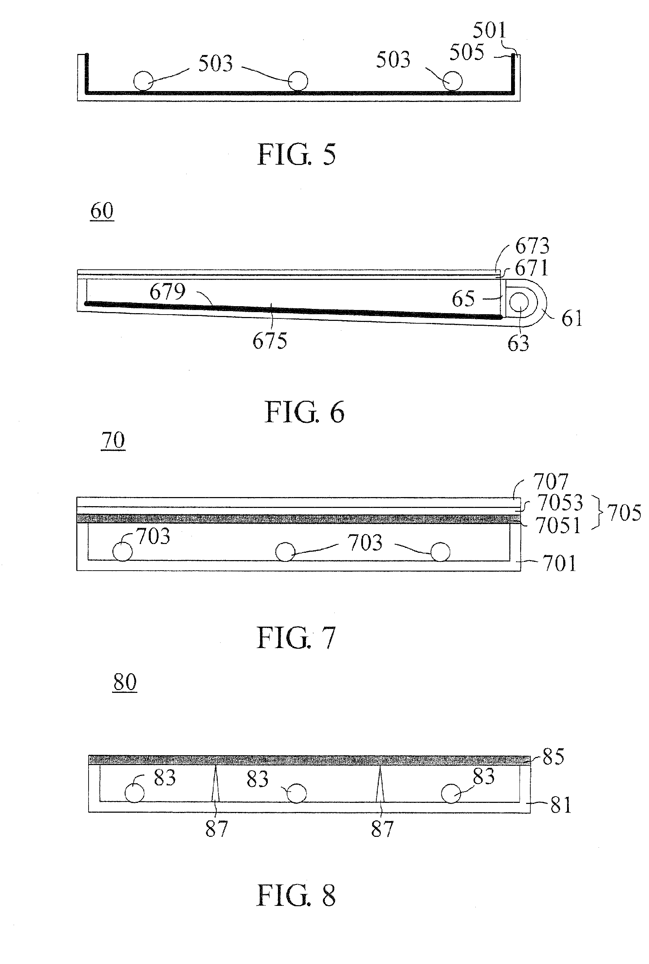

To further block leakage of UV light, a protection layer may be further disposed on the interior wall of the frame in the light-emitting module. In reference to FIG. 5, a partial cross-sectional view of a frame in another light-emitting module is depicted. The light-emitting module is as shown in FIG. 4A, except that an additional protection layer is disposed on the interior wall of the frame. As shown in FIG. 5, this embodiment comprises a frame 501 in which a plurality of UV_{C} light sources 503 are disposed. O n an interior wall of the frame is a protection layer 505 to block the light emitted by the UV_{C} light sources from transmitting through the frame 501. The protection layer 505 comprises a UV-blocking material as included in the UV-blocking coating described above, or a reflective coating (e.g., a metal layer). As shown in FIG. 3A, a wavelength converting coating may be optionally provided on the interior wall of the frame 501, in which case the protection layer 505 is sandwiched between the interior wall of the frame and the wavelength converting coating.

These light-emitting modules described above can also be applied in various backlight modules of liquid crystal devices (LCDs), such as in the side-emission type backlight module or direct-emission type backlight module. FIG. 6 illustrates a side-emission type backlight module 60 using such a light-emitting module. The backlight module 60 comprises a frame 61 which has a UV_{C} light source 63 disposed on one side. The light source 63 in turn has a wavelength converting structure 65 disposed on one side. At appropriate locations of the frame 61 are necessary optical films, such as the diffusion layer 671, prism sheet 673, light guide plate 675, reflective sheet 679, and so on.

FIG. 7 illustrates the application of the aforesaid light-emitting module in a direct-emission type backlight module. In FIG. 7, the direct-emission type backlight module 70 comprises a frame 701 with UV_{C} light sources 703 disposed therein. The frame 701 has an opening above which a wavelength converting structure 705 is disposed, and the wavelength converting structure 705 in turn has an optical film 707 disposed thereon. Here, the wavelength converting structure 705 comprises a substrate 7053 which is typically a transparent substrate and a wavelength converting coating 7051 typically disposed on the light source side of the substrate 7053.

As described above in FIG. 2B, in the conventional application of optical films to light-emitting module (including a backlight module), light source holders comprising supporting posts are provided in a frame of the light-emitting module. The supporting posts prevent the sagging of the optical films and mitigate the curvature of the film surface, thus eliminating any brightness ununiformity or inappropriate effect incurred thereby. FIG. 8 illustrates an embodiment of a conventional direct-emission type backlight module. The direct-emission type backlight module 80 comprises a frame 81 with light sources 83 disposed therein. The frame 81 has an opening above which an optical film 85 is disposed, and further has supporting posts 87 disposed therein to support the optical film 85 to eliminate any unfavorable effect due to the curved surface of the optical film 85 (for purpose of simplicity, only the supporting post portions of the light source holders are illustrated in this figure).

However, it has been found that when the conventional mean of supporting the optical film 707 with a supporting post is employed in the direct-emission type backlight module 70 shown in FIG. 7, the wavelength converting coating 7051 makes a direct contact with the supporting post since the optical film 707 is disposed on the wavelength converting structure 705 and the wavelength converting coating 7051 is disposed on the light source side of the wavelength converting structure 705. This arrangement can cause damage (e.g., scraping) to the wavelength converting coating 7051 after many usages or during the handling or assembly of the backlight module. As a result, there are light-emitting defects therein.

To avoid both the curvature due to the damage by the supporting post in the wavelength converting structure or the insufficient stiffness of the wavelength converting structure, a fixing device that can impart a tension to the wavelength converting structure is further provided in the backlight module to keep the surface of the wavelength converting structure flat without supporting posts. In particular, prior to the disposition of a wavelength converting structure on the backlight module, a tension is pre-applied to the wavelength converting structure to make the surface substantially flat. Subsequently, with the surface of the wavelength converting structure kept substantially flat, a fixing device is used to fix its shape in that state.

A variety of appropriate fixing devices may be used. For example, the fixing device comprises a first element and a second element corresponding to each other, which, when joined together, may keep the shape of the wavelength converting structure fixed. Alternatively, the fixing device comprises an element with a profile matching the frame, so that it can cooperate with the frame to keep the shape of the wavelength converting structure fixed.

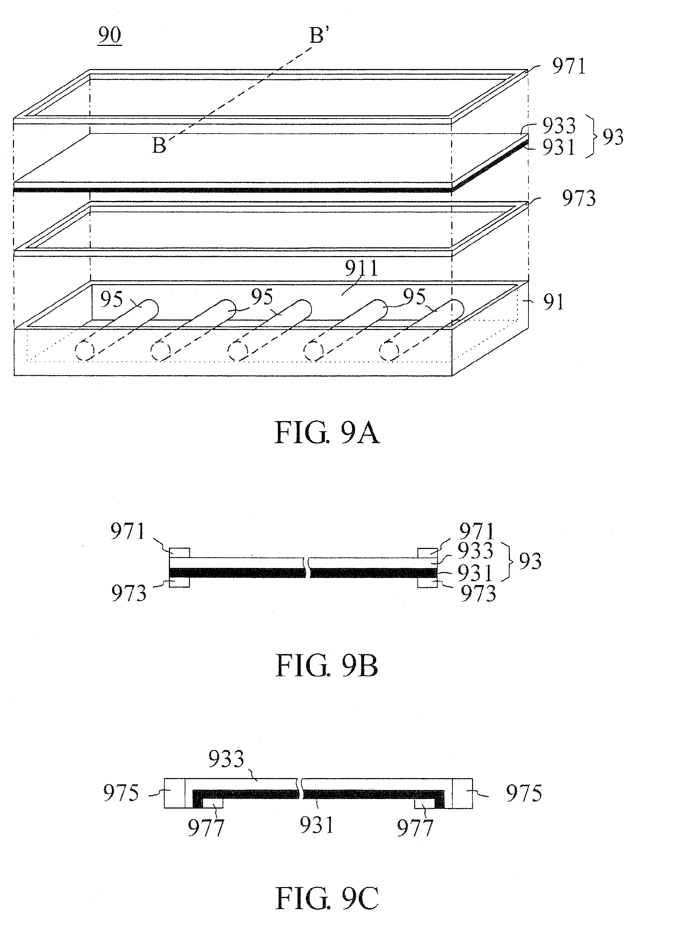

For example, in reference to FIGS. 9A to 9F, one embodiment of the backlight module comprising a specific aspect of the aforesaid fixing device is illustrated. Fig. 9A is an exploded view of the backlight module, and FIGS. 9B to 9F are partial cross-sectional views of the wavelength converting structure taken along line BB' in FIG. 9A representing different aspects thereof respectively.

As shown in FIG. 9A, the backlight module 90 comprises a frame body 91 with UV_{C} light sources 95 disposed therein. The frame body 91 has an opening 911 above which a wavelength converting structure 93 is disposed. The wavelength converting structure 93 comprises a substrate 933 and a wavelength converting coating 931 disposed on the light source side of the substrate 933. The wavelength converting structure 93 has its shape fixed by a fixing device which comprises a first frame 971 and a second frame 973 which have substantially the same size. As shown in FIG. 9B, the frame 971 and 973 are adhered to either side of the wavelength converting structure 93 respectively using an adhesive, so that the flat surface shape of the wavelength converting structure 93 can be maintained.

The two frames included in the fixing device do not necessarily have to be the same size, but rather may be of different sizes, as shown in FIG. 9C. In FIG. 9C, the fixing device comprises a first frame 975 and a second frame 977 which is smaller than the first frame in size (or vice versa, that is, the first frame 975 is smaller than the second frame 975 in size). The first frame 975 and the second frame 977 are nested into each other, in which case the wavelength converting structure 93 can be secured therebetween to maintain a substantially flat surface.

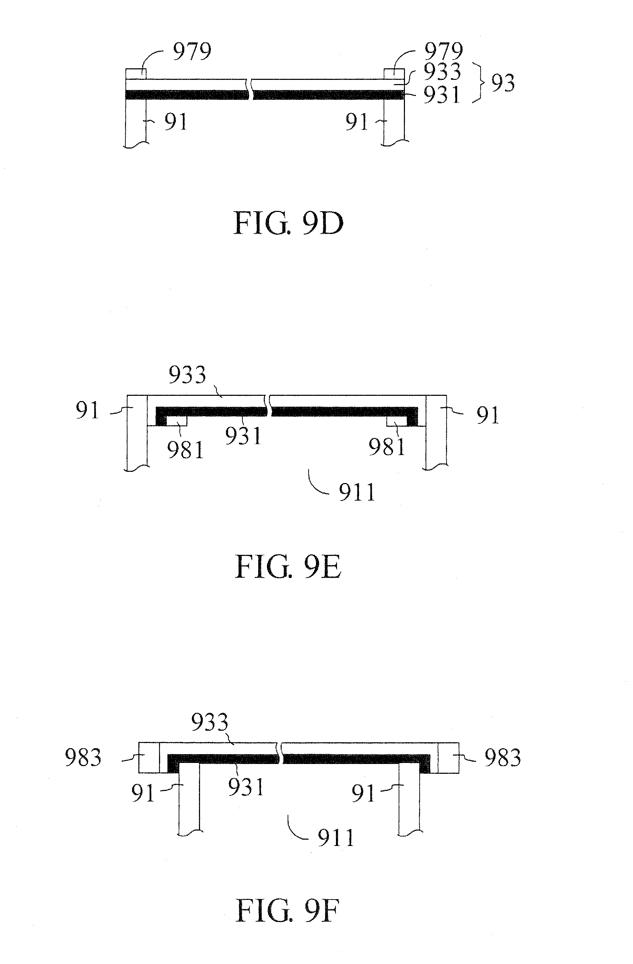

Alternatively, as shown in FIG. 9D, only a single frame 979 is used, with the wavelength converting structure 93 fixed on the frame 979 by an adhesive or other suitable means to maintain a substantially flat surface. Still alternatively, as shown in FIGS. 9E and 9F, a frame 981 with an outer diameter smaller than the opening 911 or a frame 983 with an inner diameter larger than the cross-section of the frame body 91 on the opening 911 side may be used, so that by nesting the frame 981 or 983 and the frame body 91, the shape of the wavelength converting structure 93 can be fixed with a substantially flat surface.

The frames described in the above embodiments can be formed integrally or be assembled by a plurality of strip-like elements. Additionally, the frames are not limited to a rectangular shape, but rather can be formed into other shapes (e.g., an ellipsoid shape) as desired in specific application.

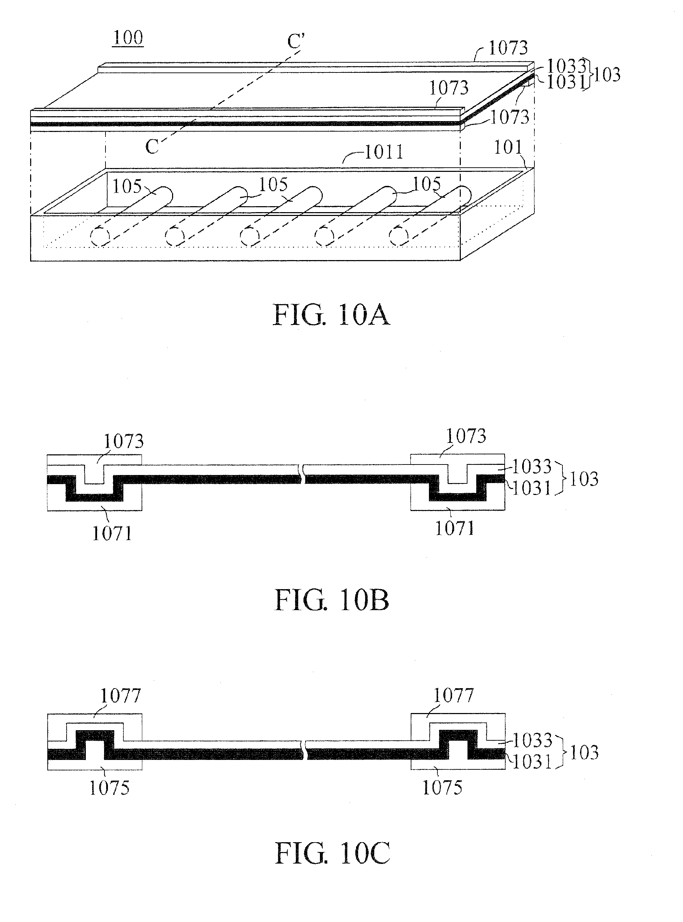

Alternatively, special features may be designed in the fixing device to fix the wavelength converting structure through the interaction of such features. In reference to FIGS. 10A to 10E, FIG. 10A illustrates another embodiment of the backlight module, and specifically is an exploded view of the backlight module, while FIGS. 10B to 10E are partial cross-sectional views of the wavelength converting structure taken along line CC' in FIG. 10A, representing different aspects thereof respectively. As shown in FIG. 10A, the frame body 101 of the backlight module 100 has a plurality of UV_{c} light sources 105 disposed therein, and has an opening 1011 above which a wavelength converting structure 103 is disposed. The wavelength converting structure 103 comprises a substrate 1033 and a wavelength converting coating 1031 disposed on the light source side of the substrate 1033. As shown in FIG. 10B, the fixing device comprises a first element 1071 with a concave portion and a second element 1073 with a convex portion. The position of the concave portion in the first element 1071 corresponds to that of the convex portion in the second element 1073.

Of course, as shown in FIG. 10C, the fixing device can alternatively comprise a first element 1075 with a convex portion and a second element 1077 with a concave portion. The position of the concave portion corresponds to that of the convex portion. Preferably, the concave portion and the convex portion are strip-like so that once they are nested into each other, the wavelength converting structure 103 can be fixed therebetween to maintain a substantially flat surface.

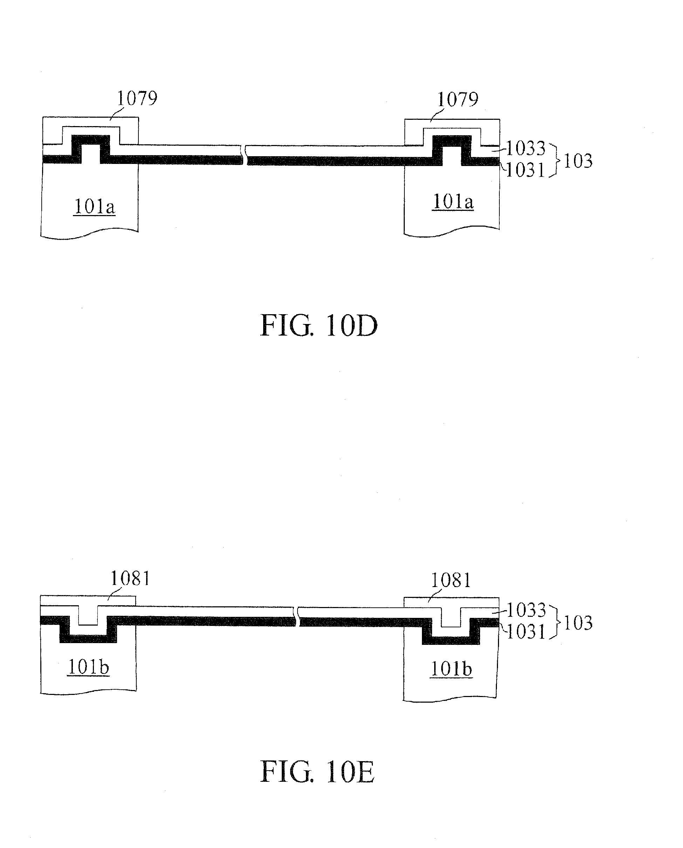

The wavelength converting structure may also be fixed by the frame body and the fixing device in combination. FIG. 10D illustrates the embodiment of such a combination. The fame body 101a further has a convex portion on the top, while the fixing device comprises a first element 1079 with a concave portion. The position of the concave portion corresponds to that of the convex portion. Consequently, once the two portions are nested into each other, the wavelength converting structure 103 can be fixed therebetween to maintain a substantially flat surface. Alternatively, the frame body has a concave portion instead on its top, while the fixing device comprises an element that has a convex portion corresponding to the concave portion, as shown in FIG. 10E. In FIG. 10E, the frame body 10b further has a concave portion on the top, while the fixing device comprises a first element 1081 with a convex portion. The position of the concave portion corresponds to that of the convex portion.

In the above embodiments, the first elements 1071, 1075, 1079, 1081 and the second elements 1073, 1077 are arranged along the sides of the wavelength converting structure 103. However, they are not just limited thereto, but can also be arranged along the entire sides or at other appropriate locations in the wavelength converting structure 103. Similarly, the concave structures and the convex structures are not just limited to the specific shapes illustrated therein. In addition, the fixing device can optionally comprise two or more first or second elements.

For example, for a frame body with a rectangular opening, the first element and the second element are strip-like elements encircled into a rectangular, or are rectangular elements assembled by L-shaped or I-shaped strip elements nested into each other. In this case, when the concave/convex portions respectively on the frame body and the fixing device are used in a nested engagement manner to fix the wavelength converting structure, two 1-shaped strip-like elements with concave/convex portions corresponding to those of the frame body can be included in the fixing device. The opposite sides of the wavelength converting structure can then be fixed by nesting these 1-shaped strip-like elements into the top surface sides of the frame body to maintain a substantially flat surface of the wavelength converting structure. Alternatively, two L-shaped strip-like elements with concave/convex portions corresponding to those of the frame body can be included in the fixing device to fix the opposite corners of the wavelength converting structure by a nested engagement between these strip-like elements and the top surface corners of the frame body. As a result, substantially flat surface of the wavelength converting structure is maintained.

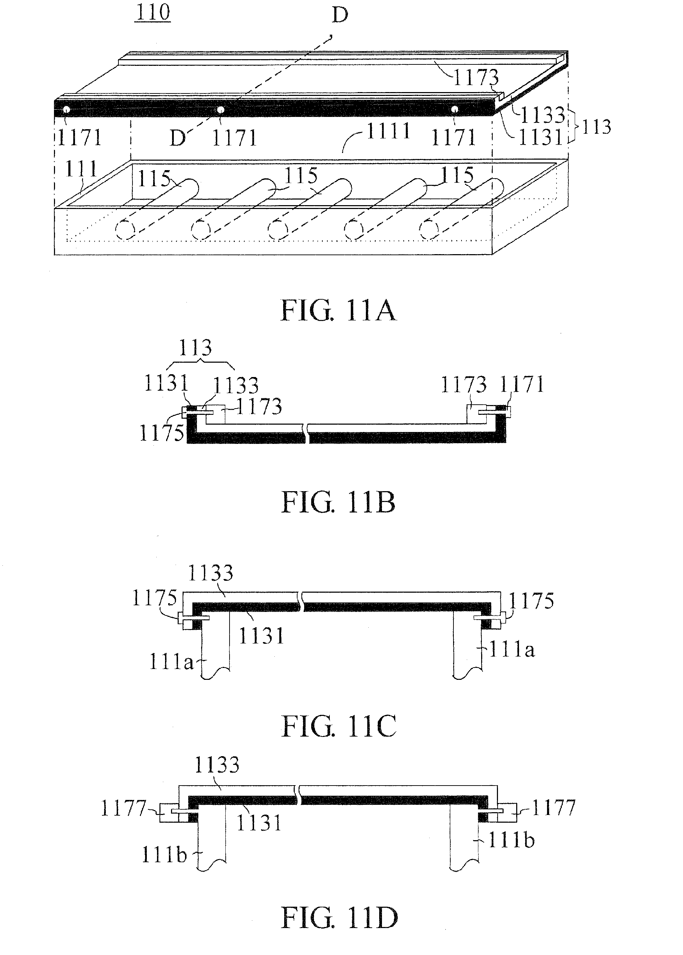

The fixing device may also exist in other forms, as shown in FIGS. 11A to 11D. FIG. 11A depicts a backlight module 110, and specifically an exploded view of the backlight module, while FIG. 11B to 11D are partial cross-sectional views of the wavelength converting structure taken along line DD' in FIG. 11A representing different aspects thereof respectively. As shown in FIG. 11A, the backlight module 110 comprises a frame body 111. The frame body 111 has UV_{C} light sources 115 disposed therein, and has an opening 1111 above which a wavelength converting structure 113 is disposed. The wavelength converting structure 113 comprises a substrate 1133 and a wavelength converting coating 1131 disposed on the light source side of the substrate 1133. As shown in FIG. 11B, the fixing device comprises a first element 1171 with a connecting member and a second element 1173 with a connecting hole cooperating with the connecting member. Engagement of the connecting member and the connecting hole joins the first element 1171 and the second element 1173 together to fix the wavelength converting structure 113 to maintain a substantially flat surface thereof.

Another embodiment of the backlight module is illustrated in FIG. 11C, where the backlight module is similar to that illustrated in FIG. 11A, except that the frame body 111a further has a connecting hole while the fixing device comprises a first element 1175 with a connecting member cooperating with the connecting hole. The connecting member and the connecting hole joins the frame body 111a and the first element 1171 of the fixing device together to fix the wavelength converting structure 113, thereby maintaining a substantially flat surface thereof. Similarly, as shown in FIG. 11D, the frame body 111b of the backlight module further has a connecting member (a sideward-protruding portion shown in the figure), while the fixing device comprises a first element 1177 with a connecting hole cooperating with the connecting member. The connecting member and the connecting hole joins the frame body 111b and the first element 1177 of the fixing device together to fix the wavelength converting structure 113, thereby maintaining a substantially flat surface thereof. In the above embodiments, the first element 1177 or the second element 1173 are shaped into strips; however, they are not just limited thereto, but rather may take on other appropriate shapes. Additionally, the connecting member can be a bolt, while the connecting hole can be a nut; or the connecting member can be a tongue, while the connecting hole is a groove; or other cooperating features well-known to those of ordinary skill in the art.

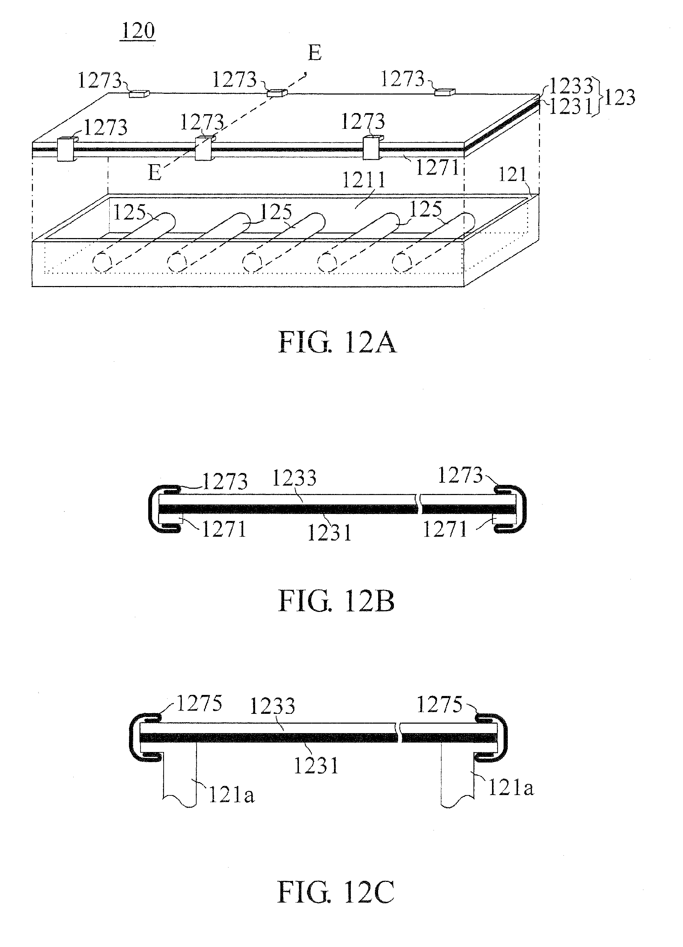

Yet another embodiment of the backlight module is shown in FIGS. 12A to 12C. FIG. 12A depicts an exploded view of the backlight module, while FIGS. 12B to 12C are partial cross-sectional views of the wavelength converting structure taken along line EE' in FIG. 12A representing different aspects thereof respectively. As shown in FIG. 12A, the backlight module 120 comprises a frame body 121. The frame body 121 has UV_{C} light sources 125 disposed therein, and has an opening 1211 above which a wavelength converting structure 123 is disposed. The wavelength converting structure 123 comprises a substrate 1233 and a wavelength converting coating 1231 disposed on the light source side of the substrate 1233. As shown in FIG. 12B, the backlight module 120 further has a fixing device, which comprises a frame 1271 and a resilient member 1273 such as a clip. With such a fixing device, the wavelength converting structure 123 is fixed on the frame 1271 by the resilient member 1273 to have its shape fixed with a substantially flat surface. Another embodiment of the fixing device is shown in FIG. 12C, where the frame body 121a has a protruding portion at its top edge, while the fixing device comprises a first element 1275 with a resilient member such as a clip. With such a fixing device, the wavelength converting structure 123 is fixed on the frame body 121a by the first element 1275 to have its shape fixed with a substantially flat surface. In the above embodiments, the resilient member can not just be limited to the specific forms illustrated, but rather may take on a spiral form or other appropriate forms.

The wavelength converting structure disclosed herein and its applications will now be further exemplified in specific embodiments.

### Examples

The components, materials and instruments employed in the following examples are as follows:
(1) Components of the adhesive:
   Adhesive solution A: Chipaste from CANDLE LABORATORY CO., Ltd, which was a solution containing 20 wt% of fluoric macromolecules. A wet film with a thickness of about 100 µm resulted from the adhesive solution A was dried completely within 30 sec under 50 °C.
   Adhesive solution B: Polyvinylidene difluoride (PVDF) from Dyneon was dissolved in acetone to get an acetone solution containing about 7 wt% of PVDF. A wet film with a thickness of about 100 µm resulted from the adhesive solution B was dried completely within 20 sec under 50°C.
   Adhesive solution C: Polyvinylidene difluoride-co-hexafluoroproplene (PVDF-HFP) from Atofina (No. Kynar2801) was dissolved in acetone to get an acetone solution containing about 7 wt% of PVDF-HFP. A wet film with a thickness of about 100 µm resulted from the adhesive solution C was dried completely within 20 sec under 50 °C.
(2) Phosphor powder: manufactured by Kasei Co., Ltd, Japan, No. LP-W1, color No. EX-D.
(3) Brightness testing method I:
   Measurement module: A module of a UV_{C} light source (253.7 nm) was used. The module had a size of 60 cm in length and 36 cm in width, in which 16 UV_{C} lamp tubes (590 cm in length, 3.5 cm in diameter, and 0.7 cm in wall thickness, with an intensity of 3100 µW/cm²) were provided with an interval of 2 cm; an aluminum reflective sheet was provided below the light source; and an area for placing a sample was reserved above the module.
   Testing method: The sample to be tested was positioned above the light source with the phosphor coating facing the UV_{C} light source. An optical measurement detector from Radiotek Corporation (No. RK828) was arranged 0.5 cm above the sample to measure the color coordinates and brightness.
(4) Brightness testing method II:
   Measurement module: A module of a UV_{C} light source (253.7 nm) was used. The module had a size of 72 cm in length and 42 cm in width, in which 16 UV_{C} lamp tubes (710 cm in length, 3.5 cm in diameter, and 0.7 cm in wall thickness, with an intensity of 3450 µW/cm²) were provided with an interval of 3.5 cm; a reflective sheet coated with the same wavelength converting coating was provided below the light source; and an area for placing the sample was reserved above the module.
   Testing method: The sample to be tested was positioned above the light source with the phosphor coating facing towards the UV_{C} light source. The brightness/colorimeter from TotalSmart technology Co., Ltd. (No. Topcon BM7) was arranged 50 cm above the sample to measure the color coordinates and brightness.

### Example 1

900 g of the adhesive solution A was put into a 2000 ml beaker and stirred by a magnet for 10 mins. Then, 900 g of phosphor powder was added thereto, and the mixture was stirred by a mechanical impeller for 20 mins at room temperature to get a homogeneously mixed slurry. Once mixed homogeneously, the slurry was put into an air pressure type pulsing circulator for stirring for 30 mins before being coated onto a PET substrate (125 µm in thickness) by a slot coating method. During slot coating, the film was coated with a coating pressure of 0.12 MPa and a speed of 15 cm/min, with the coating slot being spaced 15 µm from the PET substrate. The resulting wet film was then dried with a hot air at 50 °C, thus obtaining a sample that had a wavelength converting coating of 12 to 15 µm in thickness on the PET substrate.

The brightness testing method I was adopted, where the area for placing the sample was in a size of 30 cm in length and 20 cm in width and the sample was 1.5 cm away from the light source. The x coordinate, y coordinate and brightness value were measured on the sample according to the color coordinate measurement approach set forth in CIE 1931. The results were listed in Table 1 below:

**Table 1**

| CIEx | CIEy | brightness (cd/M²) |
|---|---|---|
| 0.271 | 0.321 | 5314 |

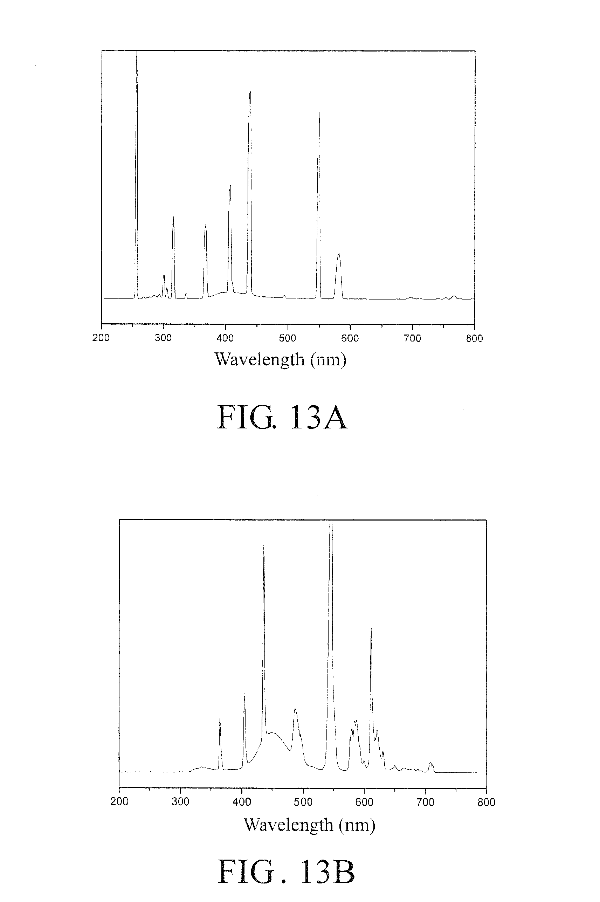

The results of the wavelength conversion are shown in FIGS. 13A and 13B, wherein FIG. 13A depicts the original light spectrum of the module comprising the UV_{C} light source, and FIG. 13B depicts the spectrum emitted through the resulting sample. The results show that the sample of the wavelength converting coating can efficiently convert the UV_{C} light into visible light.

### Example 2

The slurry preparation, coating and drying steps of Example 1 were repeated, except that the slurry was coated onto a PET substrate of 125 µm in thickness to obtain a sample that had a wavelength converting coating of 12 to 15 µm in thickness on the PET substrate.

Subsequently, using a scraper, an acrylic-based adhesive from PANTECH TAPE CO., Ltd. (No. S3277) was coated onto the other side of the sample to achieve a thickness of 25 µm. Then, the sample was laminated with an acrylic-based substrate (2 cm in thickness) and a PET protection substrate (25 µm in thickness) together by a roll laminator from CSUN MFG. Ltd. (No. CSL-M25R). Thus, the adhesive side of the sample was laminated onto one side of the acrylic-based substrate while the PET protection substrate was laminated onto the other side of the acrylic-based (polymethyl methacrylate) substrate. The laminating process was carried out at a speed of 1.5 m/min with a pressure of 3 kgf/cm² at 40 °C. Similarly, the above steps were repeated, but with a polycarbonate substrate (2 cm in thickness) replacing the acrylic-based substrate.

The brightness testing method I was adopted, where the area for placing the sample had a size of 30 cm in length and 20 cm in width and the sample was 2 cm away from the light source. Th e x coordinates, y coordinates and brightness values were measured on the samples according to the color coordinate measurement approach set forth in CIE 1931. The results were listed in Table 2 below:

**Table 2**

| Type of the substrate | CIEx | CIEy | Brightness (cd/M²) |
|---|---|---|---|
| acrylic-based substrate | 0.289 | 0.321 | 4655 |
| polycarbonate substrate | 0.280 | 0.321 | 4945 |

### Example 3

A metered amount of phosphor powder and a metered amount of adhesive solution were formulated into mixtures with the weight ratios listed in Table 3, respectively. The mixtures were then put into six 50 ml sealed vials respectively to be stirred therein by a magnet for 10 mins, followed by an ultrasonic oscillation for another 10 mins to obtain six slurries.

A PET substrate (125 µm in thickness) sized 10 cm in width and 15 cm in length was adsorbed onto a vacuum adsorption table and was coated with one of these slurries by a meyer rod coating approach with a coating speed of 10 m/min. Such a coating process was repeated for the six slurries to obtain six PET substrates coated with individual slurries, which were then subjected to a natural drying process through air circulation for 3 mins to finally obtain coatings in a thickness of about 15 to 18 µm.

The brightness testing method I was adopted, where the area for placing the sample had a size of 30 cm in length and 20 cm in width and the sample was 2 cm away from the light source. The x coordinates, y coordinates and brightness values were measured on the samples according to the color coordinate measurement approach set forth in CIE 1931. The results were listed in Table 3 below:

**Table 3**

| Weight ratio of the phosphor powder to the adhesive | CIEx | CIEy | Brightness (cd/M²) |
|---|---|---|---|
| 0.5 :1 (a comparison example) | 0.270 | 0.318 | 3497 |
| 1:1 | 0.274 | 0.323 | 3953 |
| 2.5:1 | 0.291 | 0.346 | 3809 |
| 5:1 | 0.288 | 0.347 | 4545 |
| 10:1 | 0.292 | 0.339 | 4078 |
| 15:1 | 0.262 | 0.303 | 3726 |

### Example 4

### I. Adhesive containing a carbon-fluorine bond

The slurry preparation, coating and drying steps of Example 3 were repeated, except that an adhesive solution A, an adhesive solution B and an adhesive solution C were used in this example, with a weight ratio of the phosphor powders to individual adhesive contained in the respective adhesive solutions of 5:1 respectively. The resulting slurries were coated onto the respective PET substrates of 125 µm in thickness to obtain samples that had a coating thickness of 12 to 15 µm. Here, the samples prepared from the adhesive solutions A, B and C were called Samples A, B and C, respectively.

The brightness testing method I was adopted, where the area for placing the sample had a size of 10 cm in length and 10 cm in width and the sample was 2 cm away from the light source. The x coordinates, y coordinates and brightness values were measured on the samples according to the color coordinate measurement approach set forth in CIE 1931. The results were listed in Table 4-1 below:

**Table 4-1**

| Sample | CIEx | CIEy | Brightness (cd/M²) |
|---|---|---|---|
| A | 0.282 | 0.314 | 3748 |
| B | 0.294 | 0.323 | 3502 |
| C | 0.296 | 0.327 | 3684 |

Additionally, Sample A and Sample C underwent an accelerated test in the following manner. Sample A and Sample C were placed above a single UV lamp and were 0.5 cm away from the light source. An area of 2 cm x2 cm on each sample was illuminated by the UV with an intensity of 10000 µW/cm². Intensity and chromatic values were measured on the samples at the outset and 1000 hrs later respectively. The results were listed in the table below:

| | Sample A | | | Sample C | | |
|---|---|---|---|---|---|---|
| Time | Brightness (cd/m²) | ClEx | CIEy | Brightness (cd/m²) | CIEx | CIEy |
| 0hr | 1180 | 0.290 | 0.340 | 940 | 0.286 | 0.323 |
| 1000hr | 890 | 0.296 | 0.333 | 800 | 0.294 | 0.333 |

### II. Hydrocarbon-based adhesive (a comparison example)

With a weight ratio of 5:1, the phosphor powder and the adhesive solution A were taken and put into a 50 ml sealed vial to be stirred therein by a magnet for 10 mins, followed by an ultrasonic oscillation for another 10 mins to finally obtain a fluoro slurry. Additionally, a polyvinyl alcohol (PVA) adhesive solution (with deionized water as a solvent and containing 20 wt% of PVA) was prepared and mixed homogeneously with an equal weight of phosphor powder by means of a mortar to obtain a hydrocarbon-based slurry with a hydrocarbon bond energy of 98 kcal/mol.

Two PET substrates (125 µm in thickness) with a size of 10 cm in width and 15 cm in length were adsorbed onto a vacuum adsorption table and were coated with the slurries respectively by a scraper clearance of 50 µm and at a coating speed of 10 m/min. Then, the PET substrate coated with the fluoro slurry was subjected to a natural drying process through air circulation for 3 mins, while the PET substrate coated with the hydrocarbon-based slurry was heated in an oven by hot air at 80 °C for 30 mins. The resulting coatings had a thickness of about 17 to 20 µm.

The brightness testing method I was adopted, where the area for placing the sample had a size of 30 cm in length and 20 cm in width and the sample was 1.5 cm away from the light source. The x coordinates, y coordinates and brightness values were measured on the samples according to the color coordinate measurement approach set forth in CIE 1931. The results were listed in Table 4-2 below:

**Table 4-2**

| Type of the adhesive solution | Duration of illumination (Hr) | CIEx | CIEy | Brightness (cd/M²) |
|---|---|---|---|---|
| Adhesive solution A | 0 | 0.284 | 0.324 | 4580 |
| | 180 | 0.284 | 0.320 | 4150 |
| PVA adhesive solution | 0 | 0.283 | 0.331 | 5043 |
| | 180 | 0.267 | 0.307 | 2569 |

The results in the table indicate that, as compared to an almost 50% brightness attenuation of the hydrocarbon-based slurry, the wavelength converting coating made from the adhesive solution containing a carbon-fluorine bond in this disclosure can still provide a brightness comparable to the value in the beginning even after being illuminated for 180 hours.

### III. Other adhesive solutions

10 g of tetraethoxysilane (TEOS) was taken, to which 10 g of methyltriethoxysilane (MTEOS), 3 g of ethanol, 2 g of deionized water and 1 ml of 1% aqueous HCl solution were added. Subsequently, the resulting mixture was stirred for 30 mins at room temperature into a homogeneous phase. Then, the aqueous inorganic solution, to which 8 g of phosphor powder was further added, was stirred by a magnet for 60 mins, followed by an ultrasonic oscillation for 10 mins, and then was stirred again by a magnet for another 30 mins, thus obtaining a slurry.

In the same way as described in Part II, the slurry was coated onto a PET substrate of 100 µm in thickness. The coated PET substrate was then dried in an oven at 100 °C for 60 mins, and was allowed to cool before being taken out.

The brightness testing method I was then adopted, where the area for placing the sample was 5 cm in diameter (i.e., 19.6 cm²) and the sample was 2 cm away from the light source. The x coordinates, y coordinates and brightness values were measured on the sample according to the color coordinate measurement approach set forth in CIE 1931. The results were listed in Table 4-3 below:

**Table 4-3**

| Type of adhesive | CIEx | CIEy | Brightness (cd/M²) |
|---|---|---|---|
| inorganic adhesive | 0.2728 | 0.3352 | 2673 |

### Example 5

The brightness testing method II was adopted to compare the performance of the sample made from the acrylic-based substrate in Example 2 with a conventional CCFL module at the same lamp voltage, current and with the same measuring method. The comparison results are listed in Table 5-1 and Table 5-2 below:

**Table 5-1**

| Test Items/ Specifications | CCFL | CCFL + a lower diffuser | CCFL+ a lower diffuser +BEFIII | CCFL+ a lower diffuser +BEFIII+DBEFD |
|---|---|---|---|---|
| central luminance | 4578 | 5928 | 8363 | 5729 |
| average luminance (81 points) | 4578.7 | 5811.7 | 8102.3 | 5540.7 |
| X chroma | 0.2467 | 0.2489 | 0 | 0.2591 |
| Y chroma | 0.2212 | 0.2244 | 0 | 0.2453 |
| uniformity (9 points) | 94% | 95% | 93% | 94% |

**Table 5-2**

| Test Items/ Specifications | A converting coating | A converting coating + a lower diffuser | A converting coating + a lower diffuser + BEFIII | A converting coating + a lower diffuser + BEFIII+DBEFD |
|---|---|---|---|---|
| central luminance | 6376 | 8338 | 11720 | 8066 |
| average luminance (81 points) | 6304.7 | 8218.6 | 11464.4 | 7863.2 |
| X chroma | 0.2742 | 0.2762 | 0.2813 | 0.2909 |
| Y chroma | 0.3265 | 0.3279 | 0.3362 | 0.3481 |
| uniformity (9 points) | 92% | 92% | 91% | 93% |

The results demonstrate that, the performance of the wavelength converting coating of the subject invention is superior to that of the conventional CCFL.

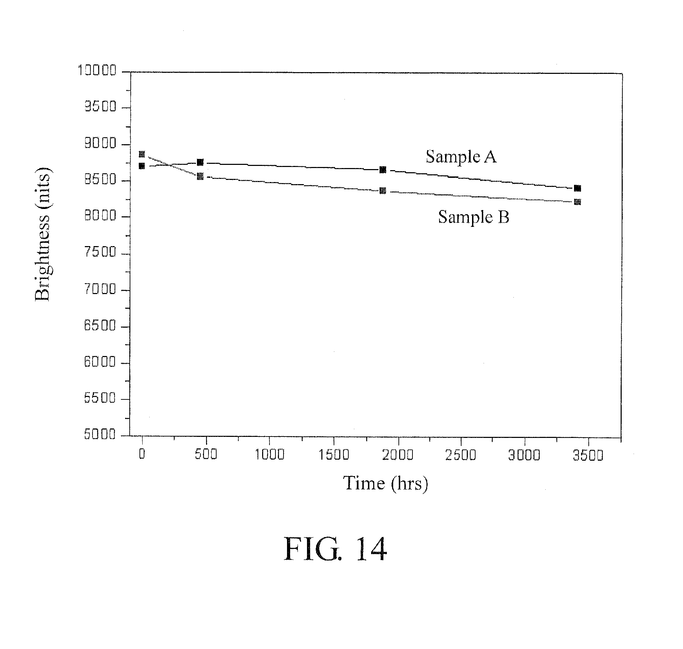

The brightness testing method II was then adopted, where the acrylic-based substrate sample (i.e., the one corresponding to the "a converting coating + a lower diffuser" column listed in Table 5-2) was illuminated in the UV_{C} module for a long time. The variations of the color coordinates and brightness were shown in Table 6 and FIG. 14. In this test, for each of the illumination duration values, two tests were performed on two sets of identical acrylic-based substrate samples respectively. The test results are shown in a Sample A column and a Sample B column respectively in Table 6. These results indicate that, even after a long illumination duration, the wavelength converting coating of the subject invention can still provide a significant brightness.

**Table 6**

| Illumination Duration (hr) | Sample No. | Central Luminance (nits) | Average Luminance (nits) | CIEx | CIEy |
|---|---|---|---|---|---|
| 0 | A | 8703 | 8599.7 | 0.2905 | 0.3409 |
| | B | 8860 | 8622.1 | 0.2844 | 0.3374 |
| 450 | A | 8755 | 8599.4 | 0.2931 | 0.3416 |
| | B | 8562 | 8384.9 | 0.2816 | 0.3286 |
| 1880 | A | 8658 | 8475.4 | 0.2929 | 0.3399 |
| | B | 8377 | 8188.8 | 0.2808 | 0.3267 |
| 3407 | A | 8413 | 8201.8 | 0.2930 | 0.3411 |
| | B | 8226 | 8013.3 | 0.2812 | 0.3282 |

### Example 6 (Effect of the UV-blocking coating)

20 g of adhesive solution A and 20 g of phosphor powder were put into a 50 ml sealed vial to be stirred therein by a magnet for 10 mins, followed by an ultrasonic oscillation for another 10 mins. The resulting slurry was coated onto a surface of a piece of quartz (10 cm x 10 cm) with a scraper clearance of 50 µm and at a coating speed of 10 m/min. Then, the coated quartz was subjected to a natural drying process through air circulation for 3 mins, thus obtaining a coating with a thickness of about 17 to 20 µm. Thus, a wavelength converting coating sample without a UV-blocking coating was provided.

The other wavelength converting coating sample was prepared in substantially the same manner, except that a piece of quartz was pre-coated with a layer of UV-blocking nanosized zinc oxide (No. NanoZ, made by Advanced Nanotechnology, Australia) on the surface by a meyer rod coating approach (RDS No. 06) with a coating speed of 10 m/min. The coated quartz was then put into an oven to dry by hot air at 100 °C for 30 mins.

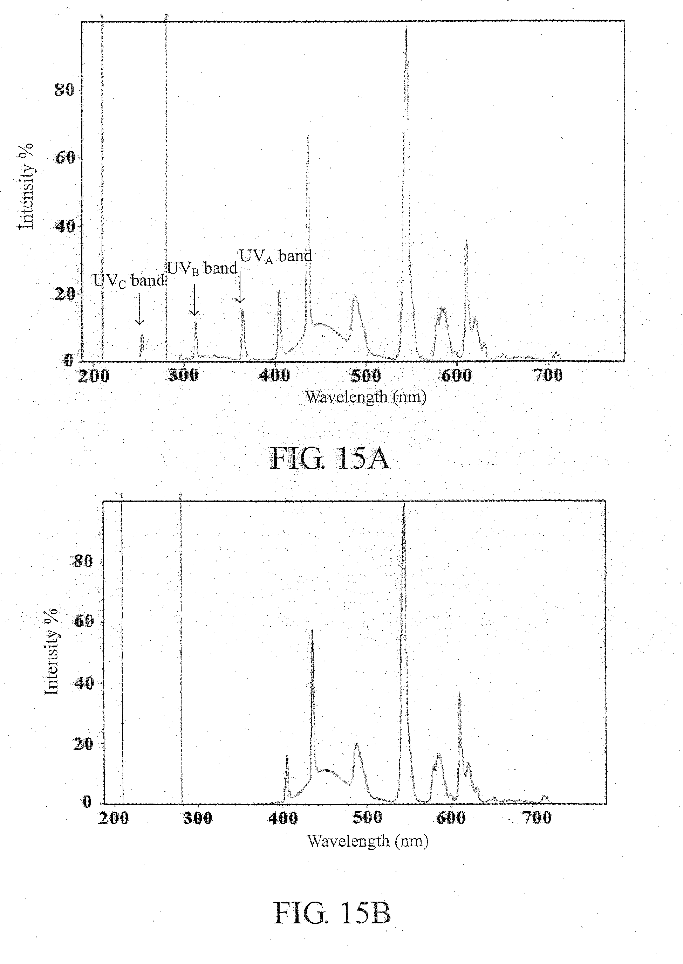

The brightness testing method I was then adopted, where the area for placing the sample had a size of 30 cm in length and 20 cm in width and the sample was 2 cm away from the light source. The x coordinates, y coordinates and brightness values were measured on the samples according to the color coordinate measurement approach set forth in CIE 1931. The results are listed in Table 6 below and in FIG. 15A (without a UV-blocking coating) and FIG. 15B (with a UV-blocking coating).

**Table 7**

| | CIEx | CIEy | Brightness (cd/M²) |
|---|---|---|---|
| Without a UV-blocking coating | 0.289 | 0.344 | 3339 |
| With a UV-blocking coating | 0.294 | 0.353 | 3535 |

It can be seen from comparing FIG. 15A and FIG. 15B that, for a light-emitting module without UV-blocking coating, a slight leakage of underutilized UV_{C} spectrum band and unutilized UV_{A} and UV_{B} spectrum bands were still found. In contrast, when the UV-blocking coating was used, the UV_{C} spectrum band and UV_{A} and UV_{B} spectrum bands were all blocked effectively. In addition, it can be seen from Table 7 that the use of the UV-blocking coating substantially had no influence on the performance of the light-emitting module.

### Example 7 (Effect of the UV-blocking coating)

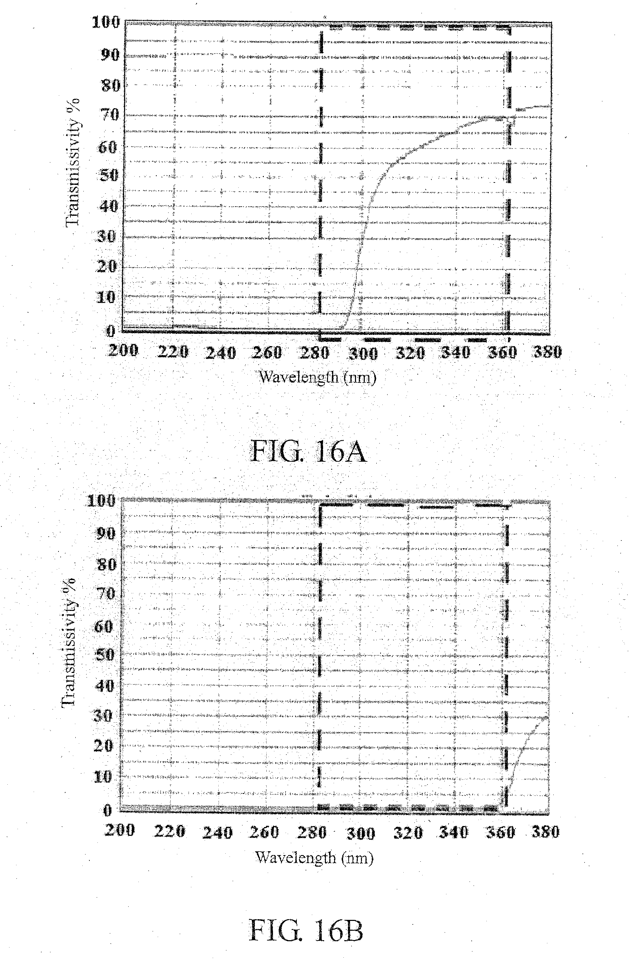

This example was the same as Example 6, except that a PET (polyethylene terephthalate) substrate was used and the UV light transmissivity was measured, as shown in FIGS. 16A and 16B. FIG. 16A shows a UV light transmission spectrum of a light-emitting module without a UV-blocking coating, and FIG. 16B shows a UV light transmission spectrum of a light-emitting module with a UV-blocking coating, where the sections framed by dashed lines represent the UV_{C} spectrum band and the UV_{B} spectrum band, respectively. It can be seen from comparing FIG. 16A and FIG. 16B that theUV light leakage can be almost completely blocked when a UV-blocking coating is used.

### Example 8 (effect of light mixing)

Two sets of structures shown in FIG. 3A were provided, with the first and the second wavelength converting coatings of the first set being the same, and those of the second set being different. The adhesive solution A and a phosphor powder from Kasei Co., Ltd, Japan were used.

The first and the second wavelength converting coatings of the first set were prepared in the following way. A phosphor powder that could emit a red visible light when excited by UV_{C} rays ("R phosphor powder"), a phosphor powder that could emit a green visible light when excited by UV_{C} rays ("G phosphor powder"), and a phosphor powder that could emit a blue visible light when excited by UV_{C} rays ("B phosphor powder") were mixed in a ratio of 4.4 : 1.6 : 4.0 to obtain a phosphor powder mixture. The resulting mixture was poured into 10 g of adhesive solution A contained in a 50 ml sealed vial to be stirred therein by a magnet for 10 mins, followed by an ultrasonic oscillation for another 10 mins to obtain a slurry. A PET substrate (100 µm in thickness; 10 cm x 15 cm) was adsorbed onto a vacuum adsorption table and was coated with the slurry using a scraper coating approach. The coating process occurred with a scraper clearance of 50 µm and at a coating speed of 10 m/min. Thereafter, the coated PET substrate was subjected to a natural drying process through air circulation for 3 mins to finally obtain a coating with a thickness of about 17 to 20 µm.

The first wavelength converting coating of the second set was prepared in the same way as that of the first set, except that 6.4 g of a phosphor powder mixture was produced by mixing the R phosphor powder and the G phosphor powder in a ratio of 4.9 : 1.5, and was then put into 6.4 g of adhesive solution A to obtain a slurry.

The second wavelength converting coating of the second set was prepared in the same way as that of the first set, except that 10 g of B phosphor powder was mixed with 10 g of adhesive solution A to obtain a slurry, which was then coated onto a PET substrate with a thickness of 225 µm.

The two sets of PET substrates with the first wavelength converting coatings were disposed above the openings of both sets of the frame bodies, while the PET substrates with the second wavelength converting coatings were disposed on the interior walls of the frame bodies. Then, optical characteristics of the two sets of structures were measured, with the results being listed in Table 8:

**Table 8**

| | CIEx | CIEy | Brightness (cd/M²) |
|---|---|---|---|
| the first set | 0.2471 | 0.2285 | 3100 |
| the second set | 0.2480 | 0.2243 | 3300 |

Table 8 demonstrates that the brightness provided by the second set has an increase of about 5% to 6% over the first set.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A wavelength converting structure, comprising:
a substrate; and
a wavelength converting coating which is disposed on the substrate and comprises:
(a) a phosphor powder which can be excited by UV_{C}; and
(b) an anti-UV_{C} adhesive,
wherein the thickness of the converting coating is about 2 to about 10 times the average particle size of the phosphor powder and the amount of the phosphor powder in the converting coating conforms to at least one of the following requirements:
(i) the phosphor powder being about 30% to about 85% by volume of the wavelength converting coating based on the total volume of the phosphor powder and the adhesive; and
(ii) the weight ratio of the phosphor powder to the adhesive ranging from about 1:1 to about 20:1.

2. The converting structure of Claim 1, wherein the thickness of the converting coating is about 3 to about 5 times the average particle size of the phosphor powder.

3. The converting structure of Claim 1, wherein the phosphor powder is about 50% to about 70% by volume of the converting coating.

4. The converting structure of Claim 1, wherein the phosphor powder can be excited by UV_{C} with a wavelength ranging from about 200 nm to about 280 nm.

5. The converting structure of Claim 1, wherein the phosphor powder can be excited by UV_{C} with a wavelength ranging from about 250 nm to about 260 nm.

6. The converting structure of Claim 1, wherein the phosphor powder can be excited by UV_{C} with a wavelength of about 253.7 nm.

7. The converting structure of Claim 1, wherein the phosphor powder can be excited by UV_{C} to emit a visible light.

8. The converting structure of Claim 1, wherein the phosphor powder can be excited by UV_{C} to emit a white light.

9. The converting structure of Claim 1, wherein the phosphor power has a particle size distribution comprising at least two particle size distributions: a first particle size distribution has a range of from about 1 µm to about 10 µm and a second particle size distribution has a range of from about 1 nm to about 1000 nm.

10. The converting structure of Claim 1, wherein the adhesive has a macromolecular structure and at least one of its repeating units comprises a chemical bond with a molecular bond energy of higher than about 113 kcal/mol.

11. The converting structure of Claim 1, wherein the adhesive is selected from a group consisting of polytetrafluoroethylene (PTFE), poly(vinylidene fluoride) (PVDF), poly(vinylidene fluoride-hexafluoropropylene) (PVDF-HFP), ethylene-tetrafluoroethylene copolymer (ETFE), fluorinated ethylene propylene copolymer (FEP), perfluoroalkoxy (PFA), fluoro-rubber, fluoro-elastomer, amorphous fluoropolymers, silicon rubber, polysiloxane, and combinations thereof.

12. The converting structure of Claim 1, wherein the adhesive is a macromolecule containing a carbon-fluorine bond.

13. The converting structure of Claim 1, wherein the converting coating further comprises a component selected from a group consisting of a stabilizer, an absorbent, a blocker, and combinations thereof.

14. The converting structure of Claim 13, wherein the stabilizer is a hindered amine.

15. The converting structure of Claim 13, wherein the absorbent is selected from a group consisting of benzophenone, benzotriazole, and a combination thereof.

16. The converting structure of Claim 13, wherein the blocker is a metal oxide.

17. The converting structure of Claim 13, wherein the blocker is selected from a group consisting of titanium dioxide, zinc oxide, alumina, and combinations thereof.

18. The converting structure of Claim 16, wherein the metal oxide has a size of nanometer.

19. The converting structure of Claim 1, wherein the substrate is a transparent substrate.

20. The converting structure of Claim 19, wherein the transparent substrate is a transparent film or thin sheet comprising a material selected from a group consisting of polyethylene terephthalate (PET), triacetyl-cellulose (TAC), poly(ethylene-2,6-naphthalate) (PEN), polyether sulfone (PES), poly(vinylidene fluoride) (PVDF), poly(ethylene-co-octene) (PE-PO), poly(propylene-co-ethylene) (PP-PE), atactic polypropylene (aPP), isotactic polypropylene (iPP), functionalized polyolefin, linear low density polyethylene-g-maleic anhydride (LLDPE-g-MA), glass, quartz, poly(methyl methacrylate) (PMMA), polystyrene (PS), methyl methacrylate-co-styrene (MS), polycarbonate (PC), a light transmissible fiber fabric, and combinations thereof.

21. The converting structure of Claim 1, wherein the substrate has an optical enhancement structure on its surface opposite to the surface applied with the wavelength converting coating.

22. The converting structure of Claim 21, wherein the optical enhancement structure is a prismatic structure or a particulate structure.

23. The converting structure of Claim 19, wherein the substrate has a composite structure composed of a PET film adhered to a surface of a glass thin sheet, a quartz thin sheet, a PMMA thin sheet, a MS thin sheet, a PC thin sheet or a light transmissible fiber fabric via a pressure sensitive polymer adhesive.

24. The converting structure of Claim 23, wherein another PET film is adhered to another surface of the glass thin sheet, the quartz thin sheet, the PMMA thin sheet, the MS thin sheet, the PC thin sheet or the light transmissible fiber fabric via a pressure sensitive polymer adhesive.

25. The converting structure of Claim 1, further comprising an optical element selected from a group consisting of a diffusion plate, a diffusion film, a brightness enhancement film, a prism plate, a dual brightness enhancement film, a polarizer, a lenticular film, and combinations thereof.

26. The converting structure of Claim 1, further comprising a UV-blocking layer.

27. The converting structure of Claim 26, wherein the UV-blocking layer comprises a component selected from a group consisting of a stabilizer, an absorbent, a blocker, and combinations thereof.

28. The converting structure of Claim 27, wherein the blocker is a metal oxide.

29. The converting structure of Claim 27, wherein the blocker is selected from a group consisting of titanium dioxide, zinc oxide, alumina, and combinations thereof.

30. The converting structure of Claim 28, wherein the metal oxide has a size in nanometer scale.

31. A method for producing a wavelength converting structure, comprising:
providing a substrate;
coating a slurry on a surface of the substrate, wherein said slurry is placed in a storage vessel and comprises:
(a) a phosphor powder which can be excited by UV_{C};
(b) an anti-UV_{C} adhesive; and
(c) an organic solvent,
wherein the weight ratio of the phosphor powder to the adhesive ranges from about 1:1 to about 20:1, and
drying the coated substrate.

32. The method of Claim 31, wherein during the coating step, the slurry in the storage vessel is kept under an agitation state.

33. The method of Claim 31, wherein the weight ratio of the phosphor powder to the adhesive ranges from about 2.5:1 to about 10:1.

34. The method of Claim 31, wherein the weight ratio of the phosphor powder to the adhesive ranges from about 3:1 to about 6:1.

35. The method of Claim 31, wherein the phosphor powder can be excited by UV_{c} with a wavelength ranging from about 200 nm to about 280 nm.

36. The method of Claim 31, wherein the phosphor powder can be excited by UV_{C} with a wavelength ranging from about 250 nm to about 260 nm.

37. The method of Claim 31, wherein the phosphor powder can be excited by UV_{C} with a wavelength of about 253.7 nm.

38. The method of Claim 31, wherein the phosphor powder can be excited by UV_{C} to emit a visible light.

39. The method of Claim 31, wherein the phosphor powder can be excited by UV_{C} to emit a white light.

40. The method of Claim 31, wherein the phosphor power has a particle size distribution comprising at least two particle size distributions: a first particle size distribution has a range of from about 1 µm to about 10 µm and a second particle size distribution has a range of from about 1 nm to about 1000 nm.

41. The method of Claim 31, wherein the adhesive has a macromolecular structure and at least one of its repeating units comprises a chemical bond with a molecular bond energy of higher than about 113 kcal/mol.

42. The method of Claim 31, wherein the adhesive is selected from a group consisting of polytetrafluoroethylene (PTFE), poly(vinylidene fluoride) (PVDF), poly(vinylidene fluoride-hexafluoropropylene) (PVDF-HFP), ethylene-tetrafluoroethylene copolymer (ETFE), fluorinated ethylene propylene copolymer (FEP), perfluoroalkoxy (PFA), fluoro-rubber, fluoro-elastomer, amorphous fluoropolymers, silicon rubber, polysiloxane, and combinations thereof.

43. The method of Claim 31, wherein the adhesive is a macromolecule containing a carbon-fluorine bond.

44. The method of Claim 31, wherein the organic solvent is selected from a group consisting of C₃-C₄ ketones, C₁-C₄ linear alkanes substituted with one or more halo groups, C₅-C₇ linear alkanes, C₅-C₆ cycloalkanes, C₁-C₄ linear alkanols, C₂-C₄ ethers, ethyl acetate, benzene, toluene, acetonitrile, tetrahydrofuran, petroleum ether, a fluoro-solvent, and combinations thereof.

45. The method of Claim 44, wherein the organic solvent is selected from a group consisting of C₃-C₄ ketones, C₁-C₄ linear alkanes substituted with one or more halo groups, C₅-C₇ linear alkanes, C₅-C₆ cycloalkanes, acetonitrile, and combinations thereof.

46. The method of Claim 44, wherein the organic solvent is selected from a group consisting of C₁-C₄ linear alkanols, C₂-C₄ ethers, ethyl acetate, benzene, toluene, tetrahydrofuran, petroleum ether, and combinations thereof.

47. The method of Claim 44, wherein the organic solvent is selected from a group consisting of toluene, methyl ethyl ketone, ethyl acetate, 1,2-dichlorethane, and combinations thereof.

48. The method of Claim 31, wherein the slurry further comprises a component selected from a group consisting of a stabilizer, an absorbent, a blocker, and combinations thereof in an amount of no more than 10 wt% of its total weight.

49. The method of Claim 48, wherein the stabilizer is a hindered amine.

50. The method of Claim 48, wherein the absorbent is selected from a group consisting of benzophenone, benzotriazole, and a combination thereof.

51. The method of Claim 48, wherein the blocker is a metal oxide.

52. The method of Claim 48, wherein the blocker is selected from a group consisting of titanium dioxide, zinc oxide, alumina, and combinations thereof.

53. The method of Claim 51, wherein the metal oxide has a size in nanometer scale.

54. The method of Claim 32, wherein the agitation state is achieved by mechanically stirring, homomixing, blending, Ultrasonic-mixing, three-roll-mills, ball-mills, planet mixing, or pulse pressurizing the slurry to form a turbulence in the vessel.

55. The method of Claim 32, wherein the agitation state is achieved by pulse pressurizing the slurry to form a turbulence in the vessel.

56. The method of Claim 31, wherein the coating step is carried out by a manner selected from a group consisting of dip coating, comma coating, spraying coating, spin coating, slot coating, curtain coating, gravure coating, and roll-to-roll coating.

57. The method of Claim 31, wherein the coating step comprises pulse pressurizing the slurry to kept it under the agitation state and slot coating or comma coating the slurry.

58. The method of Claim 31, wherein the drying step is carried out by heating or passing gas.
